# EUROPEAN PATENT APPLICATION

(11) **EP 4 568 158 A1**
(43) Date of publication of application: **11.06.2025**
(21) Application number: 23851875.7
(22) Date of filing: 09.08.2023
(51) Int. Cl.: H04L 5/00, H04W 64/00

(54) **POSITIONING METHOD AND APPARATUS, AND STORAGE MEDIUM**

(30) Priority: 09.08.2022 CN 202210953029
(71) Applicant: Huawei Technologies Co., Ltd., Shenzhen, Guangdong 518129 (CN)
(72) Inventor: YING, Jiangwei, Shenzhen, Guangdong 518129 (CN); XU, Shengfeng, Shenzhen, Guangdong 518129 (CN); LI, Meng, Shenzhen, Guangdong 518129 (CN)
(74) Representative: Isarpatent
(86) International application number: PCT/CN2023/111982
(87) International publication number: WO 2024/032654

(57) **Abstract**

A positioning method, an apparatus, and a storage medium are provided, and are applied to the field of communication technologies. The method includes: A first network element receives a first request, where the first request is used to request to perform positioning based on at least one ranging terminal; the first network element determines a ranging initiator terminal, where the ranging initiator terminal is one of the at least one ranging terminal, and the ranging initiator terminal meets a first requirement; and the first network element indicates the ranging initiator terminal to initiate ranging.

## Description

### CROSS-REFERENCE TO RELATED APPLICATIONS

This application claims priority to Chinese Patent Application No. 202210953029.6, filed with the China National Intellectual Property Administration on August 9, 2022 and entitled "POSITIONING METHOD, APPARATUS, AND STORAGE MEDIUM", which is incorporated herein by reference in its entirety.

### TECHNICAL FIELD

This application relates to the field of communication technologies, and in particular, to a positioning method, an apparatus, and a storage medium.

### BACKGROUND

A location based service/location service (location based service/location service, LBS/LCS) is a service that obtains location information of a terminal through a wireless communication network or another positioning system, and then provides various location-related information for a user based on a geographic information system.

Currently, in a process of implementing the location based service/location service, a ranging initiator terminal (initiator UE) needs to be selected to initiate ranging with another terminal to obtain ranging information, so as to perform positioning based on the ranging information. How to select a proper ranging initiator terminal to reduce network interactions is a technical problem that needs to be resolved currently.

### SUMMARY

Embodiments of this application provide a positioning method, an apparatus, and a storage medium to select a proper ranging terminal.

According to a first aspect, a positioning method is provided, including: A first network element receives a first request, where the first request is used to request to perform positioning based on at least one ranging terminal; the first network element determines a ranging initiator terminal, where the ranging initiator terminal is one of the at least one ranging terminal, and the ranging initiator terminal meets a first requirement; and the first network element indicates the ranging initiator terminal to initiate ranging.

In the foregoing implementation, because the ranging initiator terminal determined by the first network element meets a requirement (that is, meets the first requirement), a proper terminal may be selected from ranging terminals as the ranging initiator terminal, so that the ranging initiator terminal initiates the ranging operation.

In a possible implementation, the first network element determines the ranging initiator terminal, the ranging initiator terminal is one of the at least one ranging terminal, and that the ranging initiator terminal meets a first requirement includes: The first network element determines a first terminal as the ranging initiator terminal, where information about the first terminal exists in the first network element, and the first terminal is one of the at least one ranging terminal.

In the foregoing implementation, because information about the ranging initiator terminal (which is the first terminal herein) exists in the first network element, network interactions can be reduced.

For example, the first network element is an LMF (which is referred to as a first LMF herein) of a positioning request terminal. Ranging terminals include the first terminal and a second terminal. Information about the first terminal (for example, context information) exists in the first LMF, and information about the second terminal does not exist in the first LMF. In this case, the first LMF selects the first terminal as the ranging initiator terminal, so that the first LMF can send a positioning request (or a location request or a ranging request) to the first terminal to indicate the first terminal to initiate the ranging operation. However, in a same scenario, if the first LMF selects the second terminal as the ranging initiator terminal, the first LMF needs to send a positioning request (or a location request or a ranging request) to an LMF (which is referred to as a second LMF) of the second terminal, and then the second LMF sends a request to the second terminal to request the second terminal to initiate the ranging operation. It can be learned that compared with selecting the second terminal as the ranging initiator terminal, selecting the first terminal as the ranging initiator terminal can reduce the network interactions.

For another example, the first network element is a serving AMF (which is referred to as a first AMF herein) of the positioning request terminal. The ranging terminals include the first terminal and the second terminal, the information (for example, the context information) about the first terminal exists in the first AMF, and the information about the second terminal does not exist in the first AMF. In this case, the first AMF selects the first terminal as the ranging initiator terminal. Because the first AMF includes the information about the first terminal, it indicates that the first AMF sent a positioning request (or a location request or a ranging request) to the LMF of the positioning request terminal for the first terminal, the LMF (which is referred to as the first LMF herein) of the positioning request terminal has established the context information for the first terminal. In this way, after the first AMF sends the positioning request (or the location request or the ranging request) to the first LMF, the first LMF may send a request to the first terminal to indicate the first terminal to initiate the ranging operation. However, in a same scenario, if the first AMF selects the second terminal as the ranging initiator terminal, after the first AMF sends the positioning request (or the location request) to the first LMF, because context information of the second terminal does not exist in the first LMF, the first LMF needs to send the positioning request (or the location request or the ranging request) to the LMF (which is referred to as the second LMF herein) of the second terminal, and then the second LMF sends a request to the second terminal to request the second terminal to initiate the ranging operation. It can be learned that compared with selecting the second terminal as the ranging initiator terminal, selecting the first terminal as the ranging initiator terminal can reduce the network interactions.

In a possible implementation, the first network element is a first LMF; and that the first network element determines a ranging initiator terminal, where the ranging initiator terminal is one of the at least one ranging terminal, and the ranging initiator terminal meets a first requirement, includes: If information about any one of the at least one ranging terminal does not exist in the first LMF, the first LMF determines a second terminal as the ranging initiator terminal, where the second terminal is one of the at least one ranging terminal.

In a possible implementation, that the first LMF determines a second terminal as the ranging initiator terminal includes: The first LMF obtains an identifier of a serving access and mobility management function AMF of the at least one ranging terminal from unified data management UDM; the first LMF obtains one or more candidate LMFs of the at least one ranging terminal from a network repository function NRF based on the identifier of the serving AMF of the at least one ranging terminal; and if one or more candidate LMFs of the second terminal include the first LMF, it is determined that the first LMF can be used as an LMF of the second terminal, and the second terminal is determined as the ranging initiator terminal.

In the foregoing implementation, because the one or more candidate LMFs of the second terminal include the first LMF, the first LMF selects the second terminal as the ranging initiator terminal, so that the first LMF can send a request to the second terminal to request the second terminal to initiate the ranging operation. If the one or more candidate LMFs of the ranging initiator terminal selected by the first LMF do not include the first LMF, the first LMF needs to indicate, by using another network element (for example, an LMF of the ranging initiator terminal), the ranging initiator terminal to initiate the ranging operation. It can be learned that compared with selecting another terminal as the ranging initiator terminal, selecting the second terminal as the ranging initiator terminal can reduce the network interactions.

In a possible implementation, that the first LMF obtains one or more candidate LMFs of the at least one ranging terminal from an NRF based on the identifier of the serving AMF of the at least one ranging terminal includes: The first LMF sends a first query request to the NRF, where the first query request carries the identifier of the serving AMF of the at least one ranging terminal; and the first LMF receives a first query response sent by the NRF, where the first query response carries one or more identifiers of the one or more candidate LMFs of the at least one ranging terminal.

Optionally, the first query request further carries registration area information of the at least one ranging terminal.

Optionally, the first LMF obtains one or more candidate LMFs of the at least one ranging terminal from an NRF based on the identifier of the serving AMF of the at least one ranging terminal includes: The first LMF sends at least one first query request to the NRF, where the at least one first query request is in one-to-one correspondence with the at least one ranging terminal, and each first query request carries an identifier of a serving AMF of a corresponding ranging terminal; and the first LMF receives at least one first query response sent by the NRF, where the at least one first query response is in one-to-one correspondence with the at least one ranging terminal, and each first query response carries one or more identifiers of one or more candidate LMFs of a corresponding ranging terminal.

Optionally, each first query request further carries registration area information of the corresponding ranging terminal.

In a possible implementation, that the first LMF determines a second terminal as the ranging initiator terminal includes: The first LMF obtains an identifier of a serving AMF of the at least one ranging terminal from UDM; the first LMF obtains first information from an NRF based on the identifier of the serving AMF of the at least one ranging terminal, where the first information indicates that the first LMF can be used as an LMF of the second terminal; and the first LMF determines the second terminal as the ranging initiator terminal based on the first information.

In a possible implementation, that the first LMF obtains first information from an NRF based on the identifier of the serving AMF of the at least one ranging terminal includes: The first LMF sends a second query request to the NRF, where the second query request carries the identifier of the serving AMF of the at least one ranging terminal; and the first LMF receives a second query response sent by the NRF, where the second query response carries the first information.

In a possible implementation, the second query request carries an identifier of the first LMF or first indication information, and the identifier of the first LMF or the first indication information indicates: If a ranging terminal meeting a first condition exists in the at least one ranging terminal, the first LMF can be used as an LMF of the ranging terminal meeting the first condition, and the first information is returned, where one or more candidate LMFs of the ranging terminal meeting the first condition include the first LMF, and the ranging terminal meeting the first condition includes the second terminal.

Optionally, the second query response further carries an identifier of the first LMF.

Optionally, the second query request further carries registration area information of the at least one ranging terminal.

Optionally, that the first LMF obtains first information from an NRF based on the identifier of the serving AMF of the at least one ranging terminal includes: The first LMF sends at least one second query request to the NRF, where the at least one second query request is in one-to-one correspondence with the at least one ranging terminal, and each second query request carries an identifier of a serving AMF of a corresponding ranging terminal; and the first LMF receives at least one second query response sent by the NRF, where the at least one second query response is in one-to-one correspondence with the at least one ranging terminal, each second query response carries a confirmation indication, and the confirmation indication indicates whether the first LMF can be used as an LMF of a corresponding ranging terminal.

Optionally, each second query request further carries registration area information of the corresponding ranging terminal.

In a possible implementation, that the first LMF obtains an identifier of a serving AMF of the at least one ranging terminal from UDM includes: The first LMF sends a third query request to the UDM, where the third query request carries an identifier of the at least one ranging terminal; and the first LMF receives a third query response sent by the UMD, where the third query response carries the identifier of the serving AMF of the at least one ranging terminal.

Optionally, the third query response further carries registration area information of the at least one ranging terminal.

Optionally, that the first LMF obtains an identifier of a serving AMF of the at least one ranging terminal from UDM includes: The first LMF sends at least one third query request to the UDM, where the at least one third query request is in one-to-one correspondence with the at least one ranging terminal, and each third query request carries an identifier of a corresponding ranging terminal; and the first LMF receives at least one third query response sent by the UDM, where the at least one third query response is in one-to-one correspondence with the at least one ranging terminal, and each third query response carries an identifier of a serving AMF of the corresponding ranging terminal.

Optionally, each third query response further carries registration area information of the corresponding ranging terminal.

In a possible implementation, the first network element is a first AMF; and that the first network element determines a ranging initiator terminal, where the ranging initiator terminal is one of the at least one ranging terminal, and the ranging initiator terminal meets a first requirement, includes: If information about any one of the at least one ranging terminal does not exist in the first AMF, the first AMF determines a third terminal as the ranging initiator terminal, where the third terminal is one of the at least one ranging terminal.

In a possible implementation, that the first AMF determines a third terminal as the ranging initiator terminal includes: The first AMF obtains an identifier of a serving AMF of the at least one ranging terminal from UDM; the first AMF obtains one or more candidate LMFs of the at least one ranging terminal from an NRF based on the identifier of the serving AMF of the at least one ranging terminal; and if one or more candidate LMFs of the third terminal include an LMF of a positioning request terminal, the third terminal is determined as the ranging initiator terminal. Alternatively, that the first AMF determines a third terminal as the ranging initiator terminal includes: The first AMF obtains an identifier of a serving AMF of the at least one ranging terminal from UDM; the first AMF obtains one or more candidate LMFs of the at least one ranging terminal and one or more candidate LMFs of a positioning request terminal from an NRF based on the identifier of the serving AMF of the at least one ranging terminal and an identifier of a serving AMF of the positioning request terminal, where the serving AMF of the positioning request terminal is the first AMF; and if the one or more candidate LMFs of the third terminal and the one or more candidate LMFs of the positioning request terminal have an intersection, the third terminal is determined as the ranging initiator terminal.

When the first AMF has selected an LMF for the positioning request terminal, because one or more candidate LMFs of the third terminal used as the ranging initiator terminal include the LMF selected by the first AMF, in other words, the LMF can serve the third terminal, the LMF may send a request to the third terminal used as the ranging initiator terminal to request to initiate the ranging operation, thereby reducing the network interactions.

When the first AMF has not selected any LMF, the one or more candidate LMFs of the third terminal used as the ranging initiator terminal and the one or more candidate LMFs of the positioning request terminal have an intersection. In this way, the first AMF may select an LMF for the positioning request terminal from LMFs in the intersection, and the selected LMF can also serve the third terminal. Therefore, the LMF can send a request to the third terminal used as the ranging initiator terminal to request to initiate the ranging operation, thereby reducing the network interactions.

In a possible implementation, that the first AMF obtains one or more candidate LMFs of the at least one ranging terminal from an NRF based on the identifier of the serving AMF of the at least one ranging terminal includes: The first LMF sends a fourth query request to the NRF, where the fourth query request carries the identifier of the serving AMF of the at least one ranging terminal; and the first LMF receives a first query response sent by the NRF, where the first query response carries one or more identifiers of the one or more candidate LMFs of the at least one ranging terminal.

Optionally, the fourth query request further carries registration area information of the at least one ranging terminal.

Optionally, the operation of the first AMF based on the identifier of the serving AMF of the at least one ranging terminal may include: The first AMF sends at least one fourth query request to the NRF, where the at least one fourth query request is in one-to-one correspondence with the at least one ranging terminal, and each fourth query request carries an identifier of a serving AMF of a corresponding ranging terminal; and the first AMF receives at least one fourth query response sent by the NRF, where the at least one fourth query response is in one-to-one correspondence with the at least one ranging terminal, and each first query response carries one or more identifiers of one or more candidate LMFs of the corresponding ranging terminal.

Optionally, each fourth query request further carries registration area information of the corresponding ranging terminal.

In a possible implementation, that the first AMF determines a third terminal as the ranging initiator terminal includes: The first AMF obtains an identifier of a serving AMF of the at least one ranging terminal from UDM; the first AMF obtains second information from an NRF based on the identifier of the serving AMF of the at least one ranging terminal, where the second information indicates that one or more candidate LMFs of the third terminal include an LMF of a positioning request terminal; and the first AMF determines the third terminal as the ranging initiator terminal based on the second information. Alternatively, that the first AMF determines a third terminal as the ranging initiator terminal includes: The first AMF obtains an identifier of a serving AMF of the at least one ranging terminal from UDM; the first AMF obtains second information from an NRF based on the identifier of the serving AMF of the at least one ranging terminal and an identifier of a serving AMF of a positioning request terminal, where the second information indicates that one or more candidate LMFs of the third terminal and one or more candidate LMFs of the positioning request terminal have an intersection, and the serving AMF of the positioning request terminal is the first AMF; and the first AMF determines the third terminal as the ranging initiator terminal based on the second information.

In a possible implementation, that the first AMF obtains second information from an NRF based on the identifier of the serving AMF of the at least one ranging terminal includes: the first AMF sends a fifth query request to the NRF, where the fifth query request carries at least the identifier of the serving AMF of the at least one ranging terminal; and the first AMF receives a fifth query response sent by the NRF, where the fifth query response carries the second information.

In a possible implementation, the fifth query request carries an identifier of the AMF or second indication information, and the identifier of the first AMF or the second indication information indicates: if a ranging terminal meeting a second condition exists in the at least one ranging terminal, the second information is returned, where one or more candidate LMFs of the ranging terminal meeting the second condition and the one or more candidate LMFs of the positioning request terminal have an intersection; or one or more candidate LMFs of the ranging terminal meeting the second condition include the LMF of the positioning request terminal, where the ranging terminal meeting the second condition includes the third terminal.

Optionally, the fifth query response further carries the identifier of the first AMF.

Optionally, the fifth query request further carries registration area information of the at least one ranging terminal.

Optionally, that the first AMF obtains the second information from an NRF based on the identifier of the serving AMF of the at least one ranging terminal and the identifier of the first AMF includes: The first AMF sends at least one fifth query request to the NRF, where the at least one fifth query request is in one-to-one correspondence with the at least one ranging terminal, and each fifth query request carries an identifier of a serving AMF of a corresponding ranging terminal; and the first AMF receives at least one fifth query response sent by the NRF, where the at least one fifth query response is in one-to-one correspondence with the at least one ranging terminal, each fifth query response carries a confirmation indication, and the confirmation indication indicates whether one or more candidate LMFs of the corresponding ranging terminal and one or more candidate LMFs corresponding to the first AMF have an intersection.

Optionally, each fifth query request further carries registration area information of the corresponding ranging terminal.

In a possible implementation, that the first AMF obtains an identifier of a serving AMF of the at least one ranging terminal from UDM includes: The first AMF sends a sixth query request to the UDM, where the sixth query request carries an identifier of the at least one ranging terminal; and the first AMF receives a sixth query response sent by the UMD, where the sixth query response carries the identifier of the serving AMF of the at least one ranging terminal.

Optionally, the sixth query response further carries registration area information of the at least one ranging terminal.

Optionally, that the first AMF obtains an identifier of a serving AMF of the at least one ranging terminal from UDM includes: The first AMF sends at least one sixth query request to the UDM, where the at least one sixth query request is in one-to-one correspondence with the at least one ranging terminal, and each sixth query request carries an identifier of a corresponding ranging terminal; and the first AMF receives at least one sixth query response sent by the UDM, where the at least one sixth query response is in one-to-one correspondence with the at least one ranging terminal, and each sixth query response carries an identifier of a serving AMF of the corresponding ranging terminal.

Optionally, each sixth query response further carries registration area information of the corresponding ranging terminal.

In a possible implementation, the first network element is the first AMF, and that the first network element indicates the ranging initiator terminal to initiate ranging includes: the first AMF sends a second request to a second LMF, where the second request carries indication information of the ranging initiator terminal.

Optionally, the first network element is the first AMF, and that the first network element indicates the ranging initiator terminal to initiate ranging includes: The first AMF sends a third request to a first gateway mobile location center (GMLC), where the third request carries indication information of the ranging initiator terminal. Optionally, the first GMLC is a GMLC corresponding to the ranging initiator terminal.

Optionally, the first network element is the first AMF; and if the at least one ranging terminal does not include a ranging terminal meeting the first requirement, the method further includes: The first AMF determines a fourth terminal as the ranging initiator terminal, where the fourth terminal is any one of the at least one ranging terminal; the first AMF obtains an identifier of a serving AMF of the fourth terminal from UDM; and the first AMF sends a fourth request to the serving AMF of the fourth terminal based on the identifier of the serving AMF of the fourth terminal, where the fourth request carries a notification indicating that the fourth terminal is the ranging initiator terminal.

In a possible implementation, the first network element is a first GMLC. The method includes: The first GMLC receives a first location request, where the first location request is used to request to perform positioning based on the at least one ranging terminal; the first GMLC selects a fifth terminal from the at least one ranging terminal based on reachability of the at least one ranging terminal; and the first GMLC sends a second location request to the first AMF, where the second location request carries first information, the first information indicates that the fifth terminal is the ranging initiator terminal, and the first AMF is a serving AMF of the fifth terminal.

Optionally, the first GMLC is a GMLC of a positioning request terminal.

Optionally, that the first GMLC receives a first location request includes: The first GMLC receives the first location request from a serving AMF of the positioning request terminal, where the first location request carries an identifier of the at least one ranging terminal.

According to another aspect, a communication apparatus is provided, including one or more processors. One or more memories store one or more computer programs. The one or more computer programs include instructions. When the instructions are executed by the one or more processors, the communication apparatus is enabled to perform the method according to any possible implementation of the first aspect.

According to another aspect, a computer-readable storage medium is further provided, including a computer program. When the computer program is run on an electronic device, the electronic device is enabled to perform the method according to any possible implementation of the first aspect.

According to another aspect, a computer program product is further provided. When the computer program product runs on an electronic device, the electronic device is enabled to perform the method according to any possible implementation of the first aspect.

According to another aspect, a chip system is provided, including: a memory, configured to store a computer program; and a processor. After the processor invokes the computer program from the memory and runs the computer program, an electronic device on which the chip system is installed is enabled to perform the method according to any possible implementation of the first aspect.

### BRIEF DESCRIPTION OF DRAWINGS

FIG. 1 and FIG. 2 are diagrams of reference point-based architectures for 5G non-roaming according to an embodiment of this application;
FIG. 3 is a diagram of a positioning system architecture based on a 5G system according to an embodiment of this application;
FIG. 4 is a diagram of a positioning procedure according to an embodiment of this application;
FIG. 5 is a block diagram of a positioning procedure implemented on a first network element side according to an embodiment of this application;
FIG. 6 is a diagram of information exchange of a positioning procedure based on a first network element and the procedure in FIG. 5 according to an embodiment of this application;
FIG. 7A, FIG. 7B, and FIG. 7C are a diagram of an interaction procedure in a first example according to an embodiment of this application;
FIG. 8A, FIG. 8B, and FIG. 8C are a diagram of an interaction procedure in a second example according to an embodiment of this application;
FIG. 9 is a diagram of an interaction procedure in a third example according to an embodiment of this application;
FIG. 10 is a diagram of an interaction procedure in a fourth example according to an embodiment of this application;
FIG. 11 is a diagram of an interaction procedure in a fifth example according to an embodiment of this application;
FIG. 12 is a diagram of a structure of a communication apparatus according to an embodiment of this application; and
FIG. 13 is a diagram of a structure of a communication apparatus according to another embodiment of this application.

### DESCRIPTION OF EMBODIMENTS

The following describes technical solutions in embodiments of this application clearly and completely with reference to the accompanying drawings in embodiments of this application. Terms used in the following embodiments are merely intended to describe specific embodiments, but are not intended to limit this application. The terms "one", "a" and "this" of singular forms used in this specification and the appended claims of this application are also intended to include expressions such as "one or more", unless otherwise specified in the context clearly. It should be further understood that, in embodiments of this application, "one or more" refers to one, two, or more, and "and/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between associated objects.

Reference to "an embodiment", "some embodiments", or the like described in this specification indicates that one or more embodiments of this application include a specific feature, structure, or characteristic described with reference to embodiments. Therefore, the phrases "in an embodiment", "in some embodiments", "in some other embodiments", and the like in various places in this specification are not necessarily all refer to the same embodiment, but mean "one or more but not all embodiments" unless specifically emphasized otherwise. The terms "include", "contain", "have", and their variants all mean "include but are not limited to", unless otherwise specifically emphasized in another manner.

"A plurality of" in embodiments of this application indicates two or more. It should be noted that in the descriptions of embodiments of this application, the terms such as "first" and "second" are merely intended for distinction in description, but should not be construed as indicating or implying relative importance or indicating or implying a sequence.

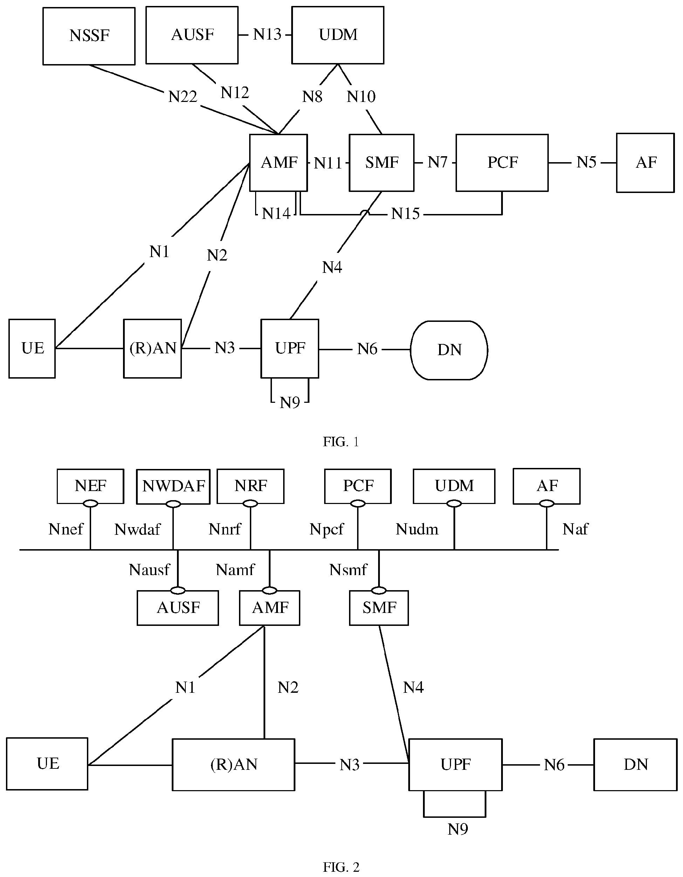

FIG. 1 and FIG. 2 show 5G non-roaming reference point-based architectures according to an embodiment of this application. A 5G system architecture is divided into two parts: an access network and a core network. As shown in FIG. 1, network functions and entities in the network structure mainly include: a user equipment (user equipment, UE), a (radio) access network ((radio) access network, (R)AN), a user plane network element (user plane function, UPF), a data network (data network, DN), an access and mobility management network element (access and mobility management function, AMF), a session management network element (session management function, SMF), a policy control network element (policy control function, PCF), an application function (application function, AF), a network slice selection function (network slice selection function, NSSF), an authentication server function (authentication server function, AUSF), a unified data repository (unified data repository, UDR) function, and the like. FIG. 2 shows corresponding interfaces and an interaction relationship between network functions and entities. For example, a UE and an AMF may interact with each other through an N1 interface, and an interaction message is referred to as an N1 message (N1 Message). Some interfaces are implemented as service-oriented interfaces.

The UE, the (R)AN, the UPF, and the DN are generally referred to as data plane network function entities. Data traffic of a user may be transmitted by using a packet data unit session (packet data unit session, PDU session) established between the UE and the DN, and the transmission passes through two network function entities: the (R)AN and the UPF. Other parts are referred to as control plane network function entities, and are mainly responsible for functions such as authentication and authorization, registration management, session management, mobility management, and policy control, to implement reliable and stable transmission of user layer traffic. A user plane is used to carry service data, and a control plane is used to carry a signaling message.

Based on the foregoing service-based 5G system architecture and non-roaming reference point-based architecture, functions of network elements related to this application are as follows:
Terminal device: The terminal device may be a UE, a handheld terminal, a notebook computer, a subscriber unit (subscriber unit), a cellular phone (cellular phone), a smartphone (smartphone), a wireless data card, a personal digital assistant (personal digital assistant, PDA) computer, a tablet computer, a wireless modem (modem), a handheld (handheld) device, an augmented reality (augmented reality, AR) device, a virtual reality (virtual reality, VR) device, a laptop computer (laptop computer), a cordless phone (cordless phone) or a wireless local loop (wireless local loop, WLL) station, a machine type communication (machine type communication, MTC) terminal, or another device that can access a network. The terminal device and the access network device communicate with each other by using an air interface technology (for example, a new radio (new radio, NR) or a long term evolution (long term evolution, LTE) technology). Terminal devices may also communicate with each other by using an air interface technology (for example, an NR technology or an LTE technology). In internet of vehicles communication, a communication terminal mounted on a vehicle is a terminal device, and a road side unit (road side unit, RSU) may also be used as a terminal device. A communication terminal is mounted on a drone, and may be viewed as a terminal device.

(R)AN device: The (R)AN device is a device that provides access for the terminal device, and includes a RAN device and an AN device. The RAN device is mainly a 3GPP network wireless network device, and the AN device may be an access network device defined in non-3GPP. The radio access network (radio access network, RAN) device is mainly responsible for functions such as radio resource management, quality of service (quality of service, QoS) management, and data compression and encryption on an air interface side. The RAN device may include base stations in various forms, for example, a macro base station, a micro base station (which is also referred to as a small cell), a relay station, and an access point. In systems using different radio access technologies, a device having a base station function may be named differently. For example, the device is referred to as a RAN or a gNB (5G NodeB) in a 5th generation (5th generation, 5G) system, is referred to as an evolved NodeB (evolved NodeB, eNB or eNodeB) in an LTE system, and is referred to as a NodeB (NodeB) in a 3rd generation (3rd generation, 3G) system.

Access network (access network) device: This network element allows interconnection and interworking between a terminal device and a 3GPP core network by using a non-3GPP technology. The non-3GPP technology is, for example, wireless fidelity (wireless fidelity, Wi-Fi), worldwide interoperability for microwave access (worldwide interoperability for microwave access, WiMAX), or a code division multiple access (code division multiple access, CDMA) network.

AMF network element: The AMF network element is a core network element, and is mainly responsible for signaling processing, for example, functions such as access control, mobility management, attachment and detachment, and gateway selection. When providing a service for a session in a terminal device, the AMF network element provides a control plane storage resource for the session to store a session identifier, an SMF network element identifier associated with the session identifier, and the like.

SMF network element: The SMF network element is mainly responsible for session management in a mobile network, for example, user plane network element selection, user plane network element redirection, internet protocol (internet protocol, IP) address allocation, bearer establishment, modification, and release, and QoS control.

UPF network element: The UPF network element is responsible for forwarding and receiving user data in the terminal device. The UPF network element may receive user data from a data network, and transmit the user data to the terminal device through the access network device. The UPF network element may further receive the user data from the terminal device through the access network device, and forward the user data to the data network. Transmission resources and scheduling functions that are used by the UPF network element to provide services for the terminal device are managed and controlled by the SMF network element.

PCF network element: The PCF network element is mainly responsible for providing a policy control decision, providing a policy rule to control a plane function, and providing a traffic-based charging control function.

Network exposure function (network exposure function, NEF) network element: The network exposure function network element mainly supports secure interaction between a 3GPP network and a third-party application.

AF network element: The AF network element mainly supports in interacting with a 3GPP core network to provide a service, for example, affecting a data routing decision and a policy control function, or providing some third-party services for a network side. If the AF and the 5G system are in different trust domains, an input may be provided through an NEF application programming interface (application programming interface, API). If the AF and the 5G system are in a same trust domain, an input may be provided directly by using a time sensitive communication time synchronization function (Time Sensitive communication Time Synchronization function, TSCTSF). In 5G, the application function network element may be an AF network element, for example, as shown in FIG. 1 or FIG. 2. In future communication, for example, 6G, the application function network element may still be an AF network element or have another name. This is not limited in this application.

Unified data management (unified data management, UDM) network element: The unified data management network element is configured to: generate an authentication credential, process a user identifier (for example, store and manage a permanent identity of a user), control access authorization, manage subscription data, and so on.

DN: The DN is a serving network providing a data transmission service for a user, for example, an IP multi-media service (IP multi-media service, IMS) or an internet (Internet).

NSSF network element: The NSSF network element is mainly responsible for selecting a network slice, and determining, based on slice selection assistance information, subscription information, and the like of a UE, a network slice instance accessible by the UE.

AUSF network element: The AUSF network element supports authentication for 3GPP access and non-3GPP access.

Network repository function (network repository function, NRF) network element: The network repository function network element supports registration and discovery of a network function.

UDR network element: The UDR network element stores and obtains subscription data used by the UDM and the PCF.

Network data analysis function (network data analytics function, NWDAF) network element: The network data analysis function network element supports in collecting data from another network function and the AF, supports in collecting data from operations, administration and maintenance (operations, administration and maintenance, OAM), and supporting in providing analysis information for the another network function and the AF.

**In** the foregoing architecture, each network element in the core network may also be referred to as a functional entity, a device, or a network function, and may be a network element implemented on dedicated hardware, a software instance running on dedicated hardware, or an instance of a virtualized function on a proper platform. For example, the virtualization platform may be a cloud platform.

In this application, the network element may also be referred to as a network function, a function, an entity, or the like. This is not limited in this application.

A distribution form of the network elements is not limited in embodiments of this application. The distribution form shown in FIG. 1 is merely an example, and is not limited in this application. The communication system architecture shown in FIG. 1 or FIG. 2 is not limited to including only the network elements shown in the figure, and may further include another device not shown in the figure. Details are not described herein in this application one by one.

For ease of description, the network elements shown in FIG. 1 are used as examples for description subsequently in this application, and an XX network element is directly referred to as XX briefly. It should be understood that names of all network elements in embodiments of this application are merely used as examples, and may also be referred to as other names in future communication, or the network elements in embodiments of this application may be replaced by other entities, devices, or the like with a same function in future communication. This is not limited in embodiments of this application. Unified descriptions are provided herein, and details are not described below again.

The communication systems shown in FIG. 1 and FIG. 2 do not constitute any limitation on a communication system to which embodiments of this application can be applicable. The communication system architectures shown in FIG. 1 and FIG. 2 are 5G system architectures. Optionally, the method in embodiments of this application is further applicable to various future communication systems, such as 6G and other communication networks.

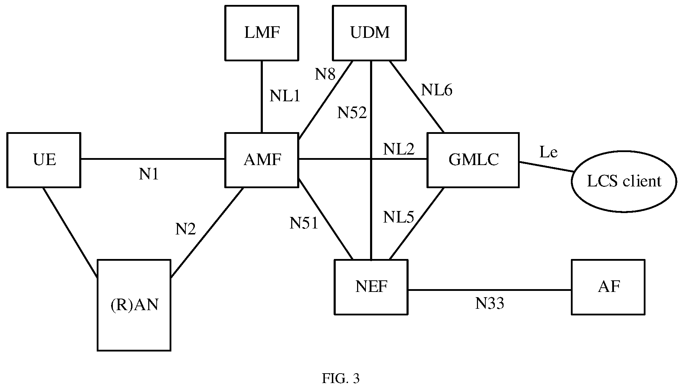

FIG. 3 shows a positioning system architecture based on a 5G system (5G system, 5GS) according to an embodiment of this application. An LCS location service architecture based on the 5GS architecture mainly includes the following network elements, network functions, or entities:
Location management function (location management function, LMF) network element: The location management function network element is configured to: calculate final location estimation information based on ranging information (which is also referred to as a positioning measurement value) collected by a UE and an NG-RAN, and manage coordination and scheduling of a positioning resource.

UDM: The UDM is configured to store a UE location privacy configuration profile that may indicate whether the UE allows another client or an AF to obtain location information of the UE.

NEF network element: The NEF network element is configured to provide a method for accessing a location based service by using an external/internal AF or a client.

Gateway mobile location center (Gateway Mobile Location Center, GMLC): The gateway mobile location center is configured to provide a method for accessing a location based service by using an external/internal AF or a client, and perform fee charging.

RAN/UE: The RAN/UE is configured to collect a positioning measurement value or a parameter of the LMF to calculate location estimation.

AMF network element: The AMF network element is configured to manage positioning of a target UE for all types of location requests.

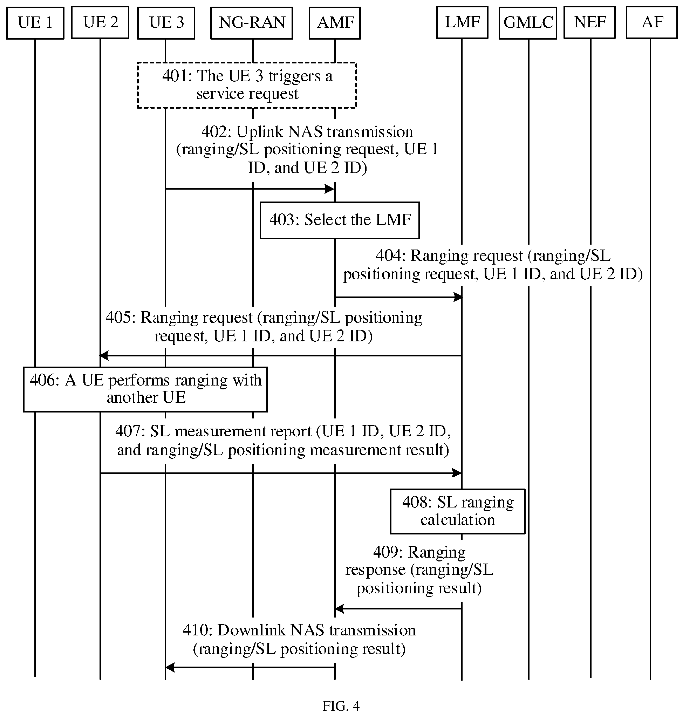

Based on the positioning system architecture shown in FIG. 3, FIG. 4 shows an example of a currently used positioning procedure. The procedure may include the following steps.

Step 401: A UE 3 triggers a service request. The UE 3 is an LCS service request terminal, or a positioning request terminal.

Step 402: The UE 3 performs uplink non-access stratum (non-access stratum, NAS) transmission to a serving AMF, sends a ranging request or a service location (service location, SL) request (which is referred to as an SL request below) to the AMF through the uplink NAS transmission, and sends identifiers of a UE 1 and a UE 2 (a UE 1 **ID** and a UE 2 ID) to the AMF. The UE 1 and the UE 2 are ranging terminal.

Step 403: The AMF selects a target LMF.

Step 404: The AMF sends a ranging request or an SL positioning request to the target LMF, and sends the identifiers of the UE 1 and the UE 2 (the UE 1 ID and the UE 2 ID) to the target LMF.

Step 405: The target LMF selects the UE 2 as an initiator for initiating a ranging (ranging) operation on a PC5 interface, that is, selects the UE 2 as a ranging initiator terminal (initiator UE), and sends a ranging request or an SL positioning request to the UE 2.

Step 406: The UE 2 initiates a ranging (ranging) operation between the UE 1 and the UE 2 based on the received ranging request or SL positioning request.

Step 407: The UE 2 sends an SL measurement report to the target LMF, where the SL measurement report carries a ranging (ranging) result.

Step 408: The target LMF determines an SL positioning result based on the ranging (ranging) result.

Step 409: The target LMF returns a ranging response to the AMF, where the ranging response carries the SL positioning result.

Step 410: The AMF performs downlink NAS transmission to a UE 3, and sends the SL positioning result to the UE 3 through the downlink NAS transmission.

**In** the foregoing procedure, there is currently no effective solution for how the LMF selects a ranging initiator terminal. A possible solution is to randomly select a terminal from the UE 1 and the UE 2 as the ranging initiator terminal. Because serving AMFs or LMFs of the ranging terminals (the UE 1 and the UE 2) and the positioning request terminal (the UE 3) may be different, different AMFs or LMFs may exchange information, affecting positioning efficiency.

Based on this, embodiments of this application provide a positioning method and a related apparatus that can implement the method. The method provided in embodiments of this application may be applicable to the positioning system architecture shown in FIG. 3 or an evolved architecture of the positioning system architecture. According to some embodiments of this application, a proper ranging initiator terminal may be selected to reduce interactions between network elements, thereby reducing complexity, reducing a delay, and improving positioning efficiency.

With reference to the accompanying drawings, the following describes the method and the apparatus that are provided in embodiments of this application.

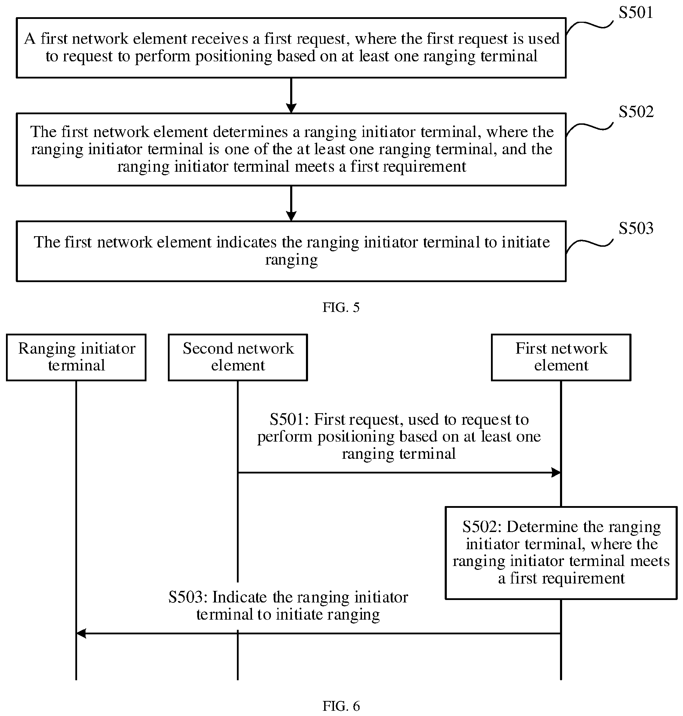

FIG. 5 is a block diagram of a positioning procedure implemented on a first network element side according to an embodiment of this application. FIG. 6 is a diagram of information exchange of a positioning procedure based on a first network element and the procedure in FIG. 5. As shown in FIG. 5 and FIG. 6, the procedure may include the following steps.

S501: A first network element receives a first request, where the first request is used to request to perform positioning based on at least one ranging terminal.

Optionally, the first request may be an SL positioning request, a ranging request, a location request, or other signaling that can be used to implement a positioning or ranging request. This is not limited in this embodiment of this application.

Optionally, the first request may carry an identifier of the ranging terminal. Optionally, the first request may further carry an identifier of a positioning request terminal. There may be one or more the ranging terminals, two or three ranging terminals, or another quantity of ranging terminals. The ranging terminal and the positioning request terminal may be different terminals, or may be a same terminal.

It can be understood that the ranging terminal is an object UE configured to perform SL ranging (SL ranging), and the positioning request terminal is a terminal that consumes an LCS service.

In a possible implementation, the first request may be from the positioning request terminal. For example, the positioning request terminal sends the first request, and the first request is sent to the first network element through a related network element (for example, a RAN, a serving AMF of a RAN, or a serving AMF of the terminal).

In another possible implementation, the first request may alternatively be from an AF. For example, the AF sends the first request, and the first request arrives at the first network element through the related network element. Optionally, the related network element may include an NEF and a GMLC of the positioning request terminal, and may further include a serving AMF of the positioning request terminal.

Optionally, if the first request is from the AF, the first request may carry the identifier of the positioning request terminal.

Optionally, the first network element may be the serving AMF of the positioning request terminal, an LMF of the positioning request terminal, the GMLC of the positioning request terminal, or the NEF. The following describes a positioning procedure provided in embodiments of this application by using different network elements as the first network element.

In FIG. 6, a second network element is used to represent a network element from which a first request comes. According to the foregoing description, the second network element may be one of the following network elements: a UE, a RAN, an AMF, and a GMLC. For example, when the first network element is an LMF, the second network element is an AMF, when the first network element is an AMF, the second network element is a RAN (or a UE, for example, the UE sends the first request by using a NAS message), or the second network element is a GMLC; or when the first network element is a GMLC, the second network element is an NEF or an AMF.

S502: The first network element determines a ranging initiator terminal, where the ranging initiator terminal is one of at least one ranging terminal, and the ranging initiator terminal meets a first requirement.

In a possible implementation, the first network element may determine a first terminal in the at least one ranging terminal as the ranging initiator terminal, and the first terminal meets the following requirement: Information about the first terminal exists in the first network element. Optionally, the information about the first terminal may include positioning context information or ranging context information of the first terminal. In other words, if the information about the first terminal (the positioning context information or the ranging context information of the terminal) in the ranging terminals exists in the first network element, the first network element may determine the first terminal as the ranging initiator terminal.

For a scenario of two ranging terminals (a UE 1 and a UE 2), if the AMF is the UE 1 initiating a ranging (ranging) request to an LMF 3, it may be considered that the LMF 3 has established a positioning context or a ranging (ranging) context for the UE 1.

For example, the first network element is an LMF of the positioning request terminal, the positioning request terminal is represented as a UE 3, the ranging terminal includes the UE 1 and the UE 2, an LMF of the UE 3 is represented as the LMF 3, the positioning context information of the UE 1 exists in the LMF 3, and positioning context information of the UE 2 does not exist in the LMF 3. If selecting the UE 1 as the ranging initiator terminal, the LMF 3 may send a ranging request or an SL positioning request to the UE 1 to request the UE 1 to perform a ranging operation, and receive a ranging result returned by the UE 1. If selecting the UE 2 as the ranging initiator terminal, the LMF 3 needs to send a ranging request or an SL positioning request to an LMF (represented as an LMF 2) of the UE 2. Then, the LMF 2 sends the ranging request or the SL positioning request to the UE 2 to request the UE 2 to perform a ranging operation, the UE 2 sends a ranging result to the LMF 2, and the LMF 2 sends the ranging result to the LMF 3. In addition, an interaction between the LMF 3 and the LMF 2 may further need to pass through a plurality of intermediate network elements, such as the GMLC and the AMF. It can be learned that compared with selecting the UE 2 as the ranging initiator terminal, selecting the UE 1 meeting the first requirement as the ranging initiator terminal in this embodiment of this application can reduce network interaction operations.

Optionally, if information about a plurality of ranging terminals exists in the first network element, the first network element may randomly select one of the plurality of ranging terminals as the ranging initiator terminal, or perform selection according to another criterion (for example, according to terminal subscription information or UE reachability). This is not limited in this embodiment of this application.

For another example, the first network element is a serving AMF of the positioning request terminal, the positioning request terminal is represented as the UE 3, the ranging terminal includes the UE 1 and the UE 2, the LMF of the UE 3 is represented as the LMF 3, a serving AMF of the UE 3 is represented as an AMF 3, context information of the UE 1 exists in the AMF 3, and the positioning context information of the UE 2 does not exist in the AMF 3. If the AMF 3 selects the UE 1 as the ranging initiator terminal, because the AMF 3 includes the positioning context information of the UE **1,** it indicates that the AMF 3 sent a positioning request (a location request or a ranging request) to the LMF 3 for the UE 1, and the positioning context information has been established in the LMF 3 for the UE 1. In this way, after the AMF 3 sends a positioning request (or a location request or a ranging request) to the LMF 3, the LMF 3 may send a request to the UE 1 to indicate the first terminal to initiate the ranging operation. However, in a same scenario, if the AMF 3 selects the UE 2 as the ranging initiator terminal, after the AMF 3 sends a positioning request (or a location request or a ranging request) to the LMF 3, because the positioning context information of the UE 2 does not exist in the LMF 3, the LMF 3 needs to send a request to an LMF (which is referred to as an LMF 2 herein) of the UE 2, and then, the LMF 2 sends a request to the UE 2 to request the second terminal to initiate the ranging operation. In addition, an interaction between the LMF 3 and the LMF 2 may further need to pass through a plurality of intermediate network elements, such as the GMLC and the AMF. Similarly, for a transmission path of a ranging result, the foregoing difference also exists. It can be learned that compared with selecting the UE 2 as the ranging initiator terminal, selecting the UE 1 as the ranging initiator terminal can reduce the network interactions.

In a possible implementation, the first network element is a first LMF. Optionally, the first LMF is the LMF of the positioning request terminal. In this case, if information about any one of the at least one ranging terminal does not exist in the first LMF, the first LMF determines a second terminal in the at least one ranging terminal as the ranging initiator terminal.

Optionally, the second terminal meets the following requirement: The first LMF can be used as an LMF of the second terminal. Optionally, if one or more candidate LMFs of the second terminal include the first LMF, the first LMF can be used as the LMF of the second terminal. Because the first LMF can be used as the LMF of the second terminal, network interaction operations can be reduced.

Optionally, if a plurality of ranging terminals meet the foregoing requirement, the first LMF may randomly select one of the plurality of ranging terminals as the ranging initiator terminal, or perform selection according to another criterion (for example, according to terminal subscription information or UE reachability). This is not limited in this embodiment of this application.

In a possible implementation, the first LMF may obtain one or more candidate LMFs of the ranging terminal by interacting with UDM and an NRF, to select the second terminal as the ranging initiator terminal based on the one or more candidate LMFs of the ranging terminal. A process thereof may include the following steps: The first LMF obtains an identifier of a serving AMF of each ranging terminal from the UDM, and obtains one or more candidate LMFs of each ranging terminal from the NRF based on the identifier of the serving AMF of each ranging terminal; and if the one or more candidate LMFs of the second terminal include the first LMF, it is determined that the first LMF can be used as the LMF of the second terminal, and the first LMF determines the second terminal as the ranging initiator terminal.

Optionally, a possible interaction process between the first LMF and the NRF may include: The first LMF sends a first query request to the NRF, where the first query request carries an identifier of a serving AMF of the at least one ranging terminal; and the NRF sends a first query response to the first LMF, where the first query response carries one or more identifiers of the one or more candidate LMFs of the ranging terminal. Optionally, the first query request further carries registration area information of the ranging terminal.

Optionally, another possible interaction process between the first LMF and the NRF may include: The first LMF sends N (where N is an integer greater than or equal to 1, and N is a quantity of ranging terminals) first query requests to the NRF. The N first query requests are in one-to-one correspondence with the N ranging terminals, and each first query request carries an identifier of a serving AMF of a corresponding ranging terminal. For example, the first LMF sends a first query request to the NRF to request to query one or more identifiers of one or more candidate LMFs of a ranging terminal 1; the first LMF sends a first query request to the NRF for the second time to request to query one or more identifiers of one or more candidate LMFs of a ranging terminal 2; and the rest may be deduced by analogy. The NRF separately sends N first query responses. The N first query responses are in one-to-one correspondence with the N ranging terminals, and each first query response carries one or more identifiers of one or more candidate LMFs of a corresponding ranging terminal. Optionally, each first query request further carries registration area information of the corresponding ranging terminal.

In another possible implementation, the first LMF may obtain one or more candidate LMFs of the ranging terminal by interacting with UDM and an NRF, to select the second terminal as the ranging initiator terminal based on the one or more candidate LMFs of the ranging terminal. A process thereof may include the following steps: The first LMF obtains an identifier of a serving AMF of each ranging terminal from the UDM, and obtains first information from the NRF based on the identifier of the serving AMF of each ranging terminal, where the first information indicates that the first LMF can be used as the LMF of the second terminal; and the first LMF determines the second terminal as the ranging initiator terminal based on the first information. In the foregoing process, the NRF may obtain one or more candidate LMFs of each ranging terminal based on an identifier of a serving AMF of the ranging terminal. If the one or more candidate LMFs of the second terminal include the first LMF, the first information is sent to the first LMF to indicate that the one or more candidate LMFs of the second terminal include the first LMF or indicate that the first LMF may be used as the LMF of the second terminal.

Optionally, the first information may include an identifier of the second terminal, or include an identifier of the second terminal and indication information indicating that the one or more candidate LMFs of the second terminal include the first LMF.

Optionally, the second query request may carry an identifier of the first LMF or first indication information, and the identifier of the first LMF or the first indication information indicates: If a ranging terminal meeting a first condition exists in the ranging terminal, a first message is returned. One or more candidate LMFs of the ranging terminal meeting the first condition include the first LMF.

Optionally, a possible interaction process between the first LMF and the NRF may include: The first LMF sends a second query request to the NRF, where the second query request carries an identifier of a serving AMF of the at least one ranging terminal; and the NRF sends a second query response to the first LMF, where the second query response carries the first information.

Optionally, the second query response may further carry the identifier of the first LMF.

Optionally, the second query request may further carry registration area information of the ranging terminal.

Optionally, another possible interaction process between the first LMF and the NRF may include: The first LMF sends N (where N is a quantity of ranging terminals) second query requests to the NRF, where the N second query requests are in one-to-one correspondence with the N ranging terminals, and each second query request carries an identifier of a serving AMF of a corresponding ranging terminal; and the NRF sends N second query responses to the first LMF, where the N second query responses are in one-to-one correspondence with the N ranging terminals, each second query response carries confirmation indication, and the confirmation indication indicates whether the first LMF can be used as an LMF of the corresponding ranging terminal. Optionally, each second query request may further carry registration area information of the corresponding ranging terminal.

In a possible implementation, a process in which the first LMF interacts with the UDM to obtain the identifier of the serving AMF of the ranging terminal may include: The first LMF sends a third query request to the UDM, where the third query request carries an identifier of each ranging terminal; the UDM sends a third query response to the first LMF, where the third query response carries the identifier of the serving AMF of each ranging terminal. Optionally, the third query response further carries registration area information of the ranging terminal.

In another possible implementation, a process in which the first LMF interacts with the UDM to obtain the identifier of the serving AMF of the ranging terminal may include: The first LMF sends N (where N is a quantity of ranging terminals) third query requests to the UDM, where the N third query requests are in one-to-one correspondence with the N ranging terminals, and each third query request carries an identifier of a corresponding ranging terminal; and the UDM sends N third query responses to the first LMF, where the N third query responses are in one-to-one correspondence with the N ranging terminals, and each third query response carries the identifier of the serving AMF of the corresponding ranging terminal. Optionally, each third query response may further carry registration area information of the corresponding ranging terminal.

In a possible implementation, the first network element is the first AMF. Optionally, the first AMF is a serving AMF of the positioning request terminal. In this case, if information (for example, positioning context information or ranging context information) about any one of the at least one ranging terminal does not exist in the first AMF, the first AMF determines a third terminal in the at least one ranging terminal as the ranging initiator terminal.

Optionally, the third terminal meets the following requirements:
- When the first AMF has selected the LMF of the positioning request terminal, one or more candidate LMFs of the third terminal include the LMF of the positioning request terminal.

Selecting a terminal meeting the foregoing conditions as the ranging initiator terminal can reduce network interaction operations. For example, the positioning request terminal is represented as the UE 3, the ranging terminal includes the UE 1 and the UE 2, a serving AMF of the UE 3 is represented as an AMF 3, the AMF 3 has selected the LMF (represented as an LMF 3) of the positioning request terminal, one or more candidate LMFs of the UE 1 include the LMF 3, and one or more candidate LMFs of the UE 2 do not include the LMF 3. If the AMF 3 selects the UE 1 as the ranging initiator terminal, a ranging request, an SL positioning request, or a location request may be sent to the LMF 3, so that the LMF 3 sends the ranging request, the SL positioning request, or the location request to the UE 1 to request the UE 1 to perform a ranging operation, and receives a ranging result returned by the UE 1. If the AMF 3 selects the UE 2 as the ranging initiator terminal, a ranging request, an SL positioning request, or a location request needs to be sent to a serving AMF (represented as an AMF 2) of the UE 2, so that the AMF 2 sends the ranging request, the SL positioning request, or the location request to an LMF (represented as an LM 2) of the UE 2. Then, the LMF 2 sends the ranging request, the SL positioning request, or the location request to the UE 2 to request the UE 2 to perform a ranging operation. The UE 2 sends a ranging result to the LMF 2, then the LMF 2 sends the ranging result to the AMF 3, and the AMF 3 sends the ranging result to the LMF 3. It can be learned that compared with selecting the UE 2 as the ranging initiator terminal, selecting the UE 1 meeting the first requirement as the ranging initiator terminal in this embodiment of this application can reduce network interaction operations.

Optionally, if a plurality of ranging terminals meet the foregoing requirement, the first AMF may randomly select one of the plurality of ranging terminals as the ranging initiator terminal, or perform selection according to another criterion (for example, according to terminal subscription information or UE reachability). This is not limited in this embodiment of this application.
- When the first AMF has not selected the LMF of the positioning request terminal, the one or more candidate LMFs of the third terminal and one or more candidate LMFs of the positioning request terminal have an intersection.

Because the one or more candidate LMFs of the third terminal and the one or more candidate LMFs of the positioning request terminal have an intersection, the first AMF may select a same LMF (for example, select an LMF from the intersection) for the positioning request terminal and the ranging initiator terminal, thereby reducing the network interaction operations.

Optionally, if a plurality of ranging terminals meet the foregoing requirement, the first AMF may randomly select one of the plurality of ranging terminals as the ranging initiator terminal, or perform selection according to another criterion (for example, according to terminal subscription information or UE reachability). This is not limited in this embodiment of this application.

In a possible implementation, if the first AMF has selected the LMF of the positioning request terminal, the first AMF may select the ranging initiator terminal in the following manner: The first AMF obtains the identifier of the serving AMF of each ranging terminal from the UDM, and obtains one or more candidate LMFs of each ranging terminal from the NRF based on the identifier of the serving AMF of each ranging terminal; and if the one or more candidate LMFs of the third terminal include the LMF of the positioning request terminal selected by the first AMF, the first AMF determines the third terminal as the ranging initiator terminal.

In another possible implementation, if the first AMF has not selected the LMF of the positioning request terminal, the first AMF may select the ranging initiator terminal in the following manner: The first AMF obtains the identifier of the serving AMF of each ranging terminal from the UDM, obtains one or more candidate LMFs of each ranging terminal and one or more candidate LMFs of the positioning request terminal from the NRF based on the identifier of the serving AMF of each ranging terminal and the identifier of the serving AMF of the positioning request terminal (where the serving AMF of the positioning request terminal is the first AMF); and if the one or more candidate LMFs of the third terminal and the one or more candidate LMFs of the positioning request terminal have an intersection, determines the third terminal as the ranging initiator terminal.

Optionally, a possible interaction process between the first AMF and the NRF may include: The first LMF sends a fourth query request to the NRF, where the fourth query request carries identifiers of serving AMFs of N (where N is a quantity of ranging terminals) ranging terminals; and the NRF sends the first query response to the first LMF, where the first query response carries one or more identifiers of one or more candidate LMFs of the N ranging terminals. Optionally, the fourth query request may further carry registration area information of the ranging terminal.

Optionally, another possible interaction process between the first AMF and the NRF may include: The first AMF sends N fourth query requests to the NRF, where the N fourth query requests are in one-to-one correspondence with the N ranging terminals, and each fourth query request carries an identifier of a serving AMF of a corresponding ranging terminal; and the NRF sends N fourth query responses to the first AMF, where the N fourth query responses are in one-to-one correspondence with the N ranging terminals, and each first query response carries one or more identifiers of one or more candidate LMFs of the corresponding ranging terminal. Optionally, each fourth query request may further carry registration area information of the corresponding ranging terminal.

In another possible implementation, if the first AMF has selected the LMF of the positioning request terminal, the first AMF may select the ranging initiator terminal in the following manner: The first AMF obtains the identifier of the serving AMF of each ranging terminal from the UDM, and obtains second information from the NRF based on the identifier of the serving AMF of each ranging terminal, where the second information indicates that one or more candidate LMFs of the third terminal includes the LMF of the positioning request terminal; and the first AMF determines the third terminal as the ranging initiator terminal based on the second information.

In another possible implementation, if the first AMF has not selected the LMF of the positioning request terminal, the first AMF may select the ranging initiator terminal in the following manner: The first AMF obtains the identifier of the serving AMF of each ranging terminal from the UDM, obtains second information from the NRF based on the identifier of the serving AMF of each ranging terminal and the identifier of the serving AMF of the positioning request terminal (where the serving AMF of the positioning request terminal is the first AMF), where the second information indicates that the one or more candidate LMFs of the third terminal and the one or more candidate LMFs of the positioning request terminal have an intersection; and the first AMF determines the third terminal as the ranging initiator terminal based on the second information.

Optionally, a possible interaction process between the first AMF and the NRF may include: The first AMF sends a fifth query request to the NRF, where the fifth query request carries at least identifiers of serving AMFs of N (where N is a quantity of ranging terminals) ranging terminals; and the NRF sends a fifth query response to the first AMF, where the fifth query response carries second information. Optionally, the fifth query response may further carry an identifier of the first LMF. Optionally, the fifth query request may further carry registration area information of the ranging terminal.

Optionally, the fifth query request may carry an identifier of the first AMF or second indication information, the identifier of the first AMF or the second indication information indicates: If a ranging terminal meeting a second condition exists in the ranging terminals, second information is returned. One or more candidate LMFs of the ranging terminal meeting the second condition and one or more candidate LMFs of the positioning request terminal have an intersection, or one or more candidate LMFs of the ranging terminal meeting the second condition include the LMF of the positioning request terminal.

Optionally, another possible interaction process between the first AMF and the NRF may include: The first AMF sends N (where N is a quantity of ranging terminals) fifth query requests to the NRF, where the N fifth query requests are in one-to-one correspondence with the N ranging terminals, and each fifth query request carries an identifier of a serving AMF of a corresponding ranging terminal and optionally the identifier of the first AMF; and the NRF sends N fifth query responses to the first AMF, where the N fifth query responses are in one-to-one correspondence with the at least one ranging terminal, each fifth query response carries a confirmation indication, and the confirmation indication indicates whether one or more candidate LMFs of the corresponding ranging terminal and one or more candidate LMFs corresponding to the first AMF have an intersection. Optionally, each fifth query request may further carry registration area information of the corresponding ranging terminal.

In a possible implementation, a process in which the first AMF obtains an identifier of a serving AMF of the at least one ranging terminal from UDM may include: The first AMF sends a sixth query request to the UDM, where the sixth query request carries identifiers of N (where N is a quantity of ranging terminals) ranging terminals; and the UDM sends a sixth query response to the first AMF, where the sixth query response carries identifiers of serving AMFs of the N ranging terminals. Optionally, the sixth query response may further carry registration area information of the N ranging terminals.

In another possible implementation, a process in which the first AMF obtains an identifier of a serving AMF of the at least one ranging terminal from UDM may include: The first AMF sends N sixth query requests to the UDM, where the N sixth query requests are in one-to-one correspondence with the N ranging terminals, each sixth query request carries an identifier of a corresponding ranging terminal; and the UDM sends N sixth query responses to the first AMF, where the N sixth query responses are in one-to-one correspondence with the at least one ranging terminal, and each sixth query response carries an identifier of a serving AMF of the corresponding ranging terminal. Optionally, each sixth query response may further carry registration area information of the corresponding ranging terminal.

In a possible implementation, the first network element may be a first GMLC. Optionally, the first GMLC is a GMLC of a positioning request terminal. In this case, the first GMLC receives a first request, where the first request is used to request to perform positioning based on the at least one ranging terminal; the first GMLC selects a fifth terminal from the at least one ranging terminal based on reachability of the at least one ranging terminal; and the first GMLC sends a second request to the first AMF (for example, a serving AMF of the fifth terminal), where the second request carries third information, and the third information indicates that the fifth terminal is a ranging initiator terminal, so that the first AMF sends a request to the LMF of the first terminal, and the LMF requests the fifth terminal to initiate a ranging operation with another ranging terminal.

Optionally, the first GMLC may obtain UDM context information of a ranging terminal from the UDM, determine reachability of the ranging terminal based on the UDM context information of the ranging terminal, and select the ranging initiator terminal based on the reachability of the ranging terminal. For example, ranging terminals include a UE 1 and a UE 2. If the UE 1 is currently outside network coverage, a network cannot page the UE 1, and the UE 1 may be set to be unreachable and stored in UDM context information of the UE. Similarly, if the UE 2 is currently within network coverage, and the network can page the UE 2, the UE 2 is set to be reachable and stored in UDM context information of the UE. In this case, the UE 1 is unreachable, and the UE 2 is reachable.

Optionally, a process in which the first GMLC receives a first request may include: The first GMLC receives the first request from the serving AMF of the positioning request terminal, where the first request may carry the identifier of the at least one ranging terminal. For example, the positioning request terminal sends a first location request to the first AMF (that is, the serving AMF of the positioning request terminal). After receiving the first location request, the first AMF sends a second location request to the GMLC (that is, the first GMLC) of the positioning request terminal, where the second location request may carry information such as the identifier of the ranging terminal.

S503: The first network element indicates the ranging initiator terminal to initiate ranging.

In a possible implementation, if the first network element is the first LMF (for example, the LMF of a positioning request terminal), in S503, the first LMF may send a ranging request or an SL positioning request to the ranging initiator terminal, so that the ranging initiator terminal initiates a ranging (ranging) operation between ranging terminals, for example, initiates the ranging operation on a PC5 interface. The ranging initiator terminal obtains a ranging result based on the ranging operation, and sends the ranging result to the first LMF. Further, the first LMF may further send the ranging result to the ranging initiator terminal or an AF (through a related network element).

In another possible implementation, if the first network element is the first AMF (for example, the serving AMF of the positioning request terminal), in S503, the first AMF sends a second request to the first LMF (for example, the LMF of the positioning request terminal), where the second request carries indication information of the ranging initiator terminal. After receiving the second request, the first LMF sends a ranging request or an SL positioning request to the ranging initiator terminal, so that the ranging initiator terminal initiates a ranging (ranging) operation between terminals based on the ranging request or the SL positioning request, for example, initiates the ranging operation on the PC5 interface. The ranging initiator terminal obtains a ranging result based on the ranging operation, and sends the ranging result to the first LMF. Further, the first LMF may further send the ranging result to the ranging initiator terminal or an AF (through a related network element).

Optionally, the ranging result may also be referred to as measurement information of a measurement result. Optionally, after receiving the measurement information, the LMF may further determine a measurement result (also referred to as a ranging result or a positioning result) based on the measurement information, and further send the measurement result (also referred to as the ranging result or the positioning result) to the positioning request terminal or the AF.

In another possible implementation, if the first network element is the first GMLC, in S503, the first GMLC sends a location request to the serving AMF of the ranging initiator terminal, where the location request carries indication information of the ranging initiator terminal. The serving AMF of the ranging initiator terminal sends the location request to the LMF of the ranging initiator terminal, and the location request carries the indication information of the ranging initiator terminal. The LMF sends a ranging request or an SL positioning request to the ranging initiator terminal, so that the ranging initiator terminal initiates a ranging (ranging) operation between ranging terminals, for example, initiates the ranging operation on the PC5 interface. The ranging initiator terminal obtains a ranging result based on the ranging operation, and sends the ranging result to the LMF. Further, the LMF may further send the ranging result to the first GMLC, and the first GMLC sends the ranging result to the ranging initiator terminal or AF (through a related network element).

In another embodiment of this application, if the first network element is the first AMF (for example, the serving AMF of the positioning request), a terminal meeting a first requirement does not exist in the ranging terminals (for example, there is no context information of any ranging terminal in all first AMFs, or there is no context information of any ranging terminal in the first AMFs and the first AMF cannot select a same LMF for the positioning request terminal and the ranging initiator terminal (for example, one or more candidate terminals of the positioning request terminal do not include one or more candidate LMFs of the ranging initiator terminal, or one or more candidate LMFs of the positioning request terminal and one or more candidate LMFs of the ranging initiator terminal do not have an intersection)), the first AMF may select any one (for example, a fourth terminal) of the ranging terminals as the ranging terminal. Then, a third request (for example, a location request) may be sent to the first GMLC (that is, the GMLC of the ranging initiator terminal), and the third request carries indication information of the ranging initiator terminal. After receiving the third request, the first GMLC sends the location request to the LMF of the ranging initiator terminal by using the serving AMF of the ranging initiator terminal, and the LMF sends the ranging request or the SL positioning request to the ranging initiator terminal, so that the ranging initiator terminal initiates a ranging (ranging) operation between ranging terminals, for example, initiates the ranging operation on the PC5 interface. The ranging initiator terminal obtains a ranging result based on the ranging operation, and sends the ranging result to the LMF. The LMF determines an SL positioning result. Then, the LMF sends the positioning result to the first GMLC by using the serving AMF of the ranging initiation terminal. Further, the first GMLC may send the positioning result to the positioning request terminal or the AF (through a related network element).

In a possible implementation, if the first AMF randomly selects a terminal, for example, a fourth terminal, from the ranging terminals as the ranging initiation terminal, the first AMF may obtain an identifier of a serving AMF of the fourth terminal from the UDM, and send a request (a fourth request) to the serving AMF of the fourth terminal based on the identifier of the serving AMF of the fourth terminal, where the request carries indication information indicating that the fourth terminal is the ranging initiator terminal. Then, the serving AMF of the fourth terminal sends a positioning request to an LMF of the fourth terminal, where the positioning request carries indication information indicating that the fourth terminal is the ranging starting terminal. The LMF sends a ranging request or an SL positioning request to the fourth terminal serving as the ranging initiator terminal, so that the ranging initiator terminal initiates a ranging (ranging) operation between ranging terminals, for example, initiates the ranging operation on the PC5 interface. The ranging initiator terminal obtains a ranging result based on the ranging operation, and sends the ranging result to the LMF. The LMF determines an SL positioning result based on the ranging (ranging) result. Further, the LMF may further send the SL positioning result to the positioning request terminal or the AF.

In the foregoing implementation, because the ranging initiator terminal determined by the first network element meets a requirement (that is, meets the first requirement), a proper terminal may be selected from ranging terminals as the ranging initiator terminal, so that the ranging initiator terminal initiates the ranging operation.

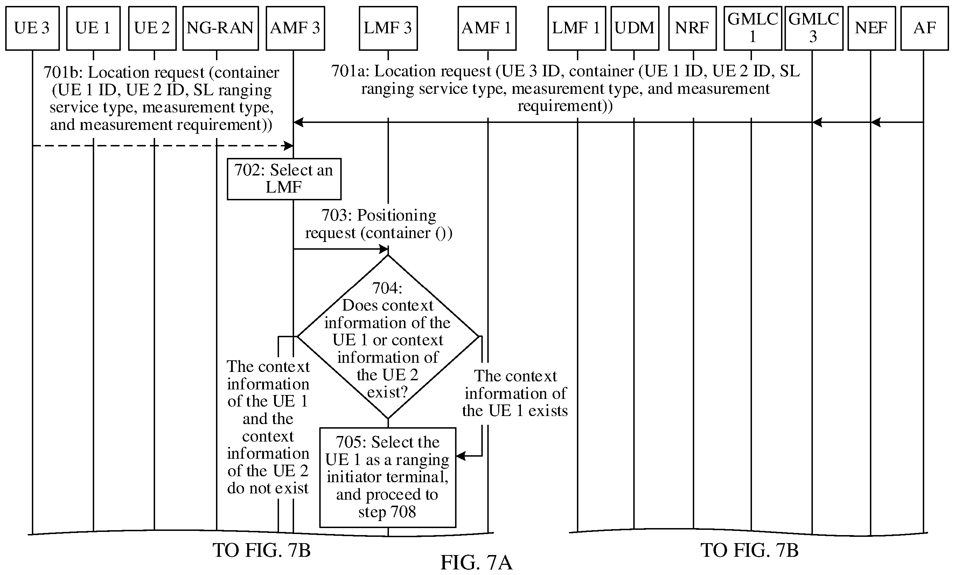

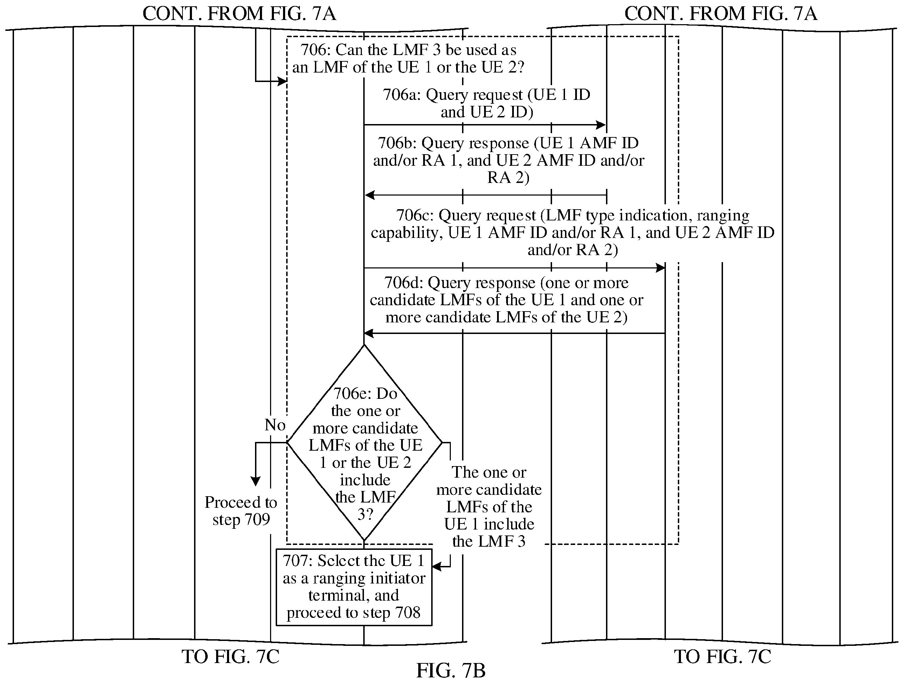

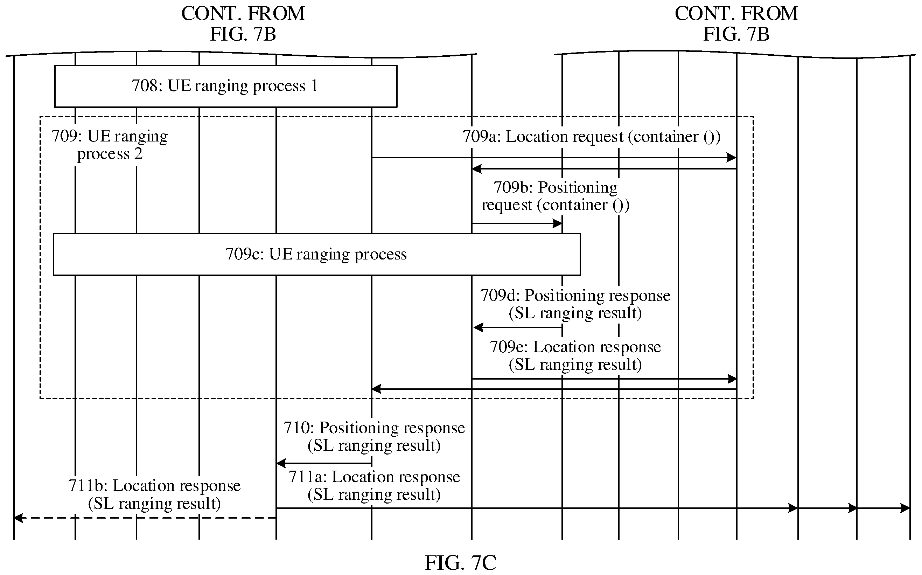

Based on the foregoing embodiments, FIG. 7A, FIG. 7B, and FIG. 7C to FIG. 11 respectively show several examples of information exchange flowcharts. The following separately describes the procedures shown in FIG. 7A, FIG. 7B, and FIG. 7C to FIG. 11.

FIG. 7A, FIG. 7B, and FIG. 7C are a diagram of an information exchange procedure in a first example according to an embodiment of this application. In the first example, a positioning request terminal is a UE 3, and ranging terminals include a UE 1 and a UE 2. An AMF 1 is a serving AMF of the UE 1, an AMF 3 is a serving AMF of the UE 3, an LMF of the UE 1 is represented as an LMF 1, and an LMF of the UE 3 is represented as an LMF 3. Aranging (ranging) request is transparently transmitted to the LMF 3 as a container (container). Because the container is invisible to an AMF, the LMF 3 selects a ranging initiator terminal. As shown in the figure, the procedure may include the following steps.

Step 701a: An AF triggers a ranging requirement.

Optionally, the AF sends a location request to the AMF 3 to request an SL ranging service. The location request carries a container. The container includes identifiers (UE 1 ID and UE 2 ID) of the ranging terminals UE 1 and UE 2. Optionally, the location request may further carry an identifier (UE 3 ID) of the positioning request terminal UE 3. Further, the container may further include information such as an SL ranging (ranging) service type, a measurement type, and an SL ranging requirement (SL ranging requirement).

Optionally, the request triggered by the AF may be sent to the AMF 3 by using an NEF and a GMLC 3.

Step 701b: The UE 3 triggers a ranging requirement.

Optionally, the UE 3 sends a location request to the AMF 3 by using a NAS message to request an SL ranging service. The location request carries a container. The container includes the identifiers (UE 1 ID and UE 2 ID) of the ranging terminals UE 1 and UE 2. Further, the container may further include information such as an SL ranging (ranging) service type, a measurement type, and an SL ranging requirement (SL ranging requirement).

In a positioning scenario, generally, only one of step 701a and step 701b is performed, that is, the ranging requirement is triggered by either the AF or the UE 3.

Step 702: The AMF 3 selects an LMF 3 for the positioning request terminal UE 3.

Because positioning-related information is transmitted in a container (container) mode, for the AMF 3, the UE 1 ID and the UE 2 ID are invisible, and a ranging starting terminal cannot be selected from the UE 1 and the UE 2. Therefore, the LMF selects a ranging initiator terminal, and the AMF 3 selects an LMF (for example, the LMF 3 in this example) for the UE 3.

Step 703: The AMF 3 sends a positioning request to the LMF 3, where the positioning request carries the container.

Step 704: The LMF 3 checks whether context information of the UE 1 or context information of the UE 2 exists.

In this example, if the context information of the UE 1 exists in the LMF 3 but the context information of the UE 2 does not exist in the LMF 3, step 705 is performed; or if the context information of the UE 1 and the context information of the UE 2 do not exist in the LMF 3, step 706 is performed.

Step 705: The LMF 3 selects the UE 1 as the ranging initiator terminal.

In this step, an example in which the context information of the UE 1 exists in the LMF 3 is used. If the context information of the UE 2 exists in the LMF 3 but the context information of the UE 1 does not exist in the LMF 3, the LMF 3 selects the UE 2 as the ranging initiator terminal. If the context information of the UE 1 and the context information of the UE 2 exist in the LMF 3, the LMF 3 may select the UE 1 or the UE 2 as the ranging initiator terminal.

Step 706: Determine whether the LMF 3 can be used as an LMF of the UE 1 or the UE 2; and perform step 707 if the LMF 3 can be used as the LMF of the UE 1, or perform step 709 if the LMF 3 cannot be used as the LMF of the UE 1.

In this step, the LMF 3 may interact with the NRF by using UDM to obtain candidate LMFs of the UE 1 and the UE 2, so as to determine, based on the candidate LMFs of the UE 1 and the UE 2, whether the LMF 3 can be used as the LMF of the UE 1 or the UE 2. For example, the process may include step 706a to step 706e.

Step 706a: The LMF 3 sends a query request to the UDM, where the query request may carry the UE 1 ID and the UE 2 ID to request identifiers of serving AMFs of the UE 1 and the UE 2.

Step 706b: The UDM returns a query response to the LMF 3, where the query response may carry an identifier (UE 1 AMF ID) of the serving AMF of the UE 1 and an identifier (UE 2 AMF ID) of the serving AMF of the UE 2. Optionally, the query response may further carry registration area information of the UE 1 and the UE 2.

In a possible alternative solution of step 706a to step 706b, the LMF 3 sends, to the UDM, a query request 1 carrying the identifier of the UE 1, and receives a query response 1 that is returned by the UDM and that carries the identifier of the serving AMF of the UE 1. Optionally, the query response 1 may further include the registration area information of the UE 1. The LMF 3 sends, to the UDM, a query request 2 carrying the identifier of the UE 2, and receives a query response 2 that is returned by the UDM and that carries the identifier of the serving AMF of the UE 2. Optionally, the query response 2 may further include the registration area information of the UE 2.

Step 706c: The LMF 3 sends a query request to the NRF to request a candidate LMF of each ranging terminal. The query request may carry the UE 1 AMF ID and the UE 2 AMF ID, may further carry the registration area information of the UE 1 and the registration area information of the UE 2, and may further carry information such as an LMF type indication.

Step 706d: The NRF returns a query response to the LMF 3, where the query response may carry an identifier of the candidate LMF of the UE 1 and an identifier of the candidate LMF of the UE 2. There may be one or more candidate LMFs.

In a possible alternative solution of step 706c to step 706d, the LMF 3 sends, to the NRF, a query request 1 carrying the identifier of the serving AMF of the UE **1,** and receives a query response 1 that is returned by the NRF and that carries the identifier of the candidate LMF of the UE 1. Optionally, the query request 1 may further include the registration area information of the UE 1. The LMF 3 sends, to the NRF, a query request 2 carrying the identifier of the serving AMF of the UE 2, and receives a query response 2 that is returned by the NRF and that carries the identifier of the candidate LMF of the UE 2. Optionally, the query request 2 may further include the registration area information of the UE 2.

In another possible alternative solution of step 706c to step 706d, the LMF 3 sends a query request to the NRF to request to determine whether the LMF 3 can serve the UE 1 or the UE 2 or whether the LMF 3 can be used as the LMF of the UE 1 or the UE 2. The query request may carry the UE 1 AMF ID and the UE 2 AMF ID, may further carry the registration area information of the UE 1 and the registration area information of the UE 2, and may further carry information such as an LMF type indication. The NRF returns a query response to the LMF 3, where the query response includes first information. If the one or more candidate LMFs of the UE 1 include the LMF 3, the first information may include the identifier of the UE **1,** and optionally, may further include a confirmation indication. After receiving the first information, the LMF 3 uses the UE 1 as the ranging initiator terminal. If the one or more candidate LMFs of the UE 2 include the LMF 3, the first information may include the identifier of the UE 2, and optionally, may further include a confirmation indication. After receiving the first information, the LMF 3 uses the UE 2 as the ranging initiator terminal. If the one or more candidate LMFs of the UE 1 and the UE 2 include the LMF 3, the first information may include the identifiers of the UE 1 and the UE 2. After receiving the first information, the LMF 3 may use a corresponding ranging terminal as the ranging initiator terminal based on the identifiers of the UEs included in the first information.

In another possible alternative solution of step 706c to step 706d, the LMF 3 sends, to the NRF, a query request 1 carrying the serving AMF of the UE 1. Optionally, the query request 1 may further carry information such as the registration area information of the UE 1 and the LMF type indication. The NRF returns a query response 1 to the LMF 3. The query response 1 includes first information, indicating whether the one or more candidate LMFs of the UE 1 include the LMF 3 or indicating whether the LMF 3 can serve the UE 1. The LMF 3 sends, to the NRF, a query request 2 carrying the serving AMF of the UE 2. Optionally, the query request 2 may further carry information such as the registration area information of the UE 2 and the LMF type indication. The NRF returns a query response 2 to the LMF 3. The query response 2 includes first information, indicating whether the one or more candidate LMFs of the UE 2 include the LMF 3 or indicating whether the LMF 3 can serve the UE 2.

Step 706e: The LMF 3 determines whether the one or more candidate LMFs of the UE 1 or the UE 2 include the LMF 3; and performs step 707 if the one or more candidate LMFs of the UE 1 include the LMF 3, or performs step 709 if the one or more candidate LMFs of the UE 1 do not include the LMF 3.

It should be noted that if the LMF 3 receives the identifiers of the candidate LMFs of the UE 1 and the UE 2, the LMF 3 determines, based on the identifiers of the candidate LMFs of the UE 1 and the UE 2, whether the one or more candidate LMFs of the UE 1 or the UE 2 include the LMF 3. If the LMF 3 receives the first information, the LMF 3 may directly determine, based on the first information, whether the one or more candidate LMFs of the UE 1 or the UE 2 include the LMF 3.

Step 707: The LMF 3 selects the UE 1 as the ranging initiator terminal, and proceeds to step 708.

In this step, an example in which the one or more candidate LMFs of the UE 1 include the LMF 3 is used. If the one or more candidate LMFs of the UE 2 include the LMF 3, the LMF 3 selects the UE 2 as the ranging initiator terminal. If the candidate LMFs of the UE 1 and the UE 2 both include the LMF 3, the LMF 3 may select the UE 1 or the UE 2 as the ranging initiator terminal.

Step 708: The LMF 3 initiates and performs a ranging (ranging) operation between the UE 1 and the UE 2, and then proceeds to step 710.

This step may include an information exchange process of a plurality of steps, and may involve the serving AMFs of the UE 1 and the UE 2.

Step 709: As a ranging requester, the LMF 3 indicates, by using a GMLC, the ranging initiator terminal to perform the ranging operation, and then proceeds to step 710.

Optionally, step 709 may include step 709a to step 709e.

Step 709a: As a ranging (ranging) requester, the LMF 3 sends a location request to the serving AMF (AMF 1) of the UE 1 by using a GMLC 3, where the location request may carry the container.

Step 709b: The AMF 1 initiates a ranging (ranging) positioning request of the UE 1 to the LMF 1 to request a ranging (ranging) result between the UE 1 and the UE 2.

Step 709c: The LMF 1 initiates to perform ranging (ranging) between the UE 1 and the UE 2. The process may involve the LMF 1, the AMF 1, the UE 1, and the UE 2, and optionally, may further involve a RAN.

Step 709d: The LMF 1 returns the ranging (ranging) result to the AMF 1.

Step 709e: The AMF 1 returns the ranging (ranging) result to the LMF 3 by using a GMLC 1.

Step 710: The LMF 3 sends a positioning response to the AMF 3, where the positioning response may carry the ranging result.

Step 711a: If ranging is triggered by an AF (refer to step 701a), the AMF 3 sends the ranging result to the AF by using the GMLC 3 and an NEF.

Step 711b: If ranging is triggered by the UE 3 (refer to step 701b), the AMF 3 sends the ranging result to the UE 3. For example, the ranging result may be sent to the UE 3 by using a downlink NAS message.

The foregoing is described by using three terminals as an example. In a scenario of two terminals, the LMF may also select the ranging initiator terminal based on a principle of the foregoing procedure. In this scenario, the LMF 3 may select a positioning request terminal as the ranging initiator terminal. In a scenario with more than two ranging terminals, the LMF may also select the ranging initiation terminal based on the principle of the foregoing procedure.

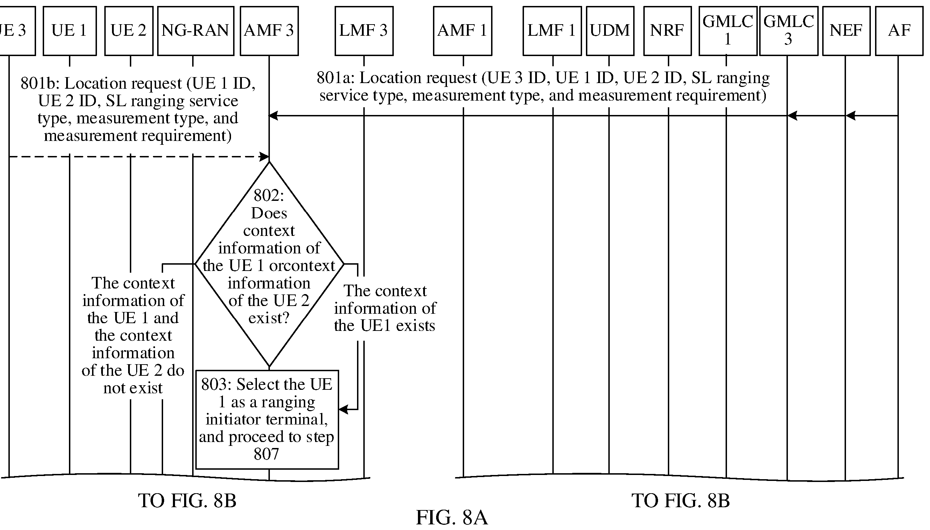

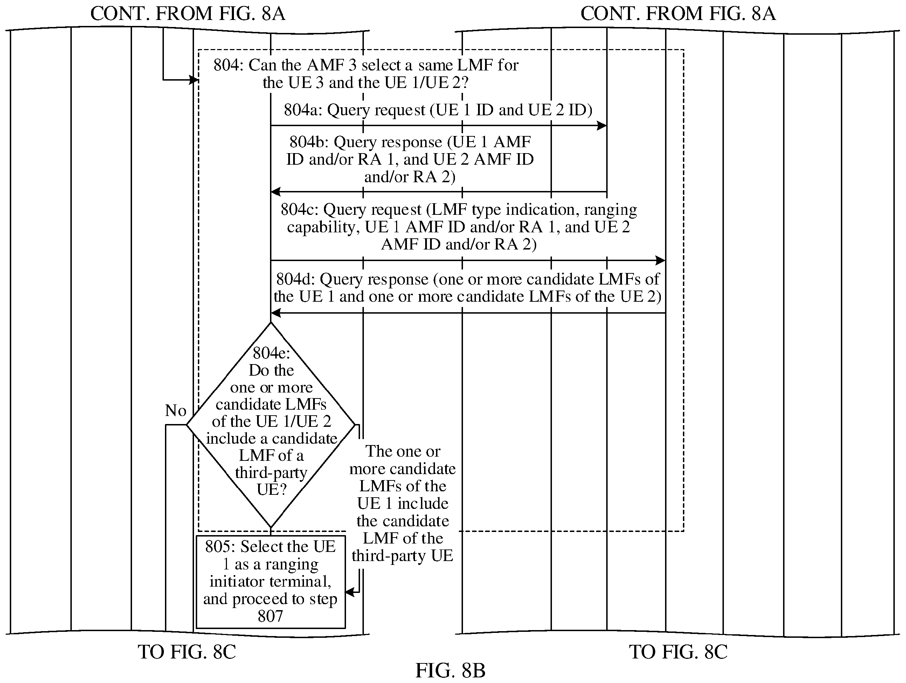

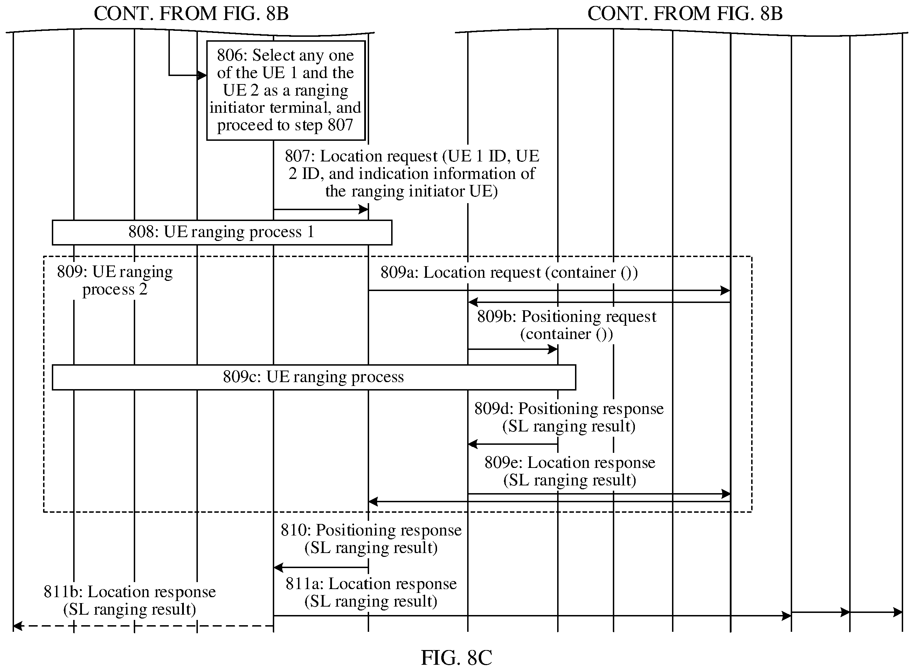

FIG. 8A, FIG. 8B, and FIG. 8C are a diagram of an information exchange procedure in a second example according to an embodiment of this application. In the second example, a positioning request terminal is a UE 3, and ranging terminals include a UE 1 and a UE 2. An AMF 1 is a serving AMF of the UE 1, an AMF 3 is a serving AMF of the UE 3, an LMF of the UE 1 is represented as an LMF 1, and an LMF of the UE 3 is represented as an LMF 3. Because a ranging (ranging) requirement is visible to an AMF, the AMF selects a ranging initiator terminal. As shown in the figure, the procedure may include the following steps.

Step 801a: An AF triggers a ranging requirement.

Optionally, the AF sends a location request to the AMF 3 to request an SL ranging service. The location request carries identifiers (UE 1 ID and UE 2 ID) of the ranging terminals UE 1 and UE 2, optionally, may further carry an identifier (UE 3 ID) of the positioning request terminal UE 3, and further, may carry information such as an SL ranging (ranging) service type, a measurement type, and an SL ranging requirement (SL ranging requirement).

Optionally, the request triggered by the AF may be sent to the AMF 3 by using an NEF and a GMLC 3.

Step 801b: The UE 3 triggers a ranging requirement.

Optionally, the UE 3 sends a location request to the AMF 3 by using a NAS message to request an SL ranging service. The location request may carry identifiers (UE 1 ID and UE 2 ID) of the ranging terminals UE 1 and UE 2, and further, may carry information such as an SL ranging (ranging) service type, a measurement type, and an SL ranging requirement (SL ranging requirement).

In a positioning scenario, generally, only one of step 801a and step 801b is performed, that is, the ranging requirement is triggered by either the AF or the UE 3.

Step 802: The AMF 3 checks whether context information of the UE 1 or context information of the UE 2 exists.

Because positioning-related information is not transmitted in a container (container) mode, the positioning-related information is visible to the AMF 3. Therefore, the AMF 3 may select the ranging initiator terminal.

In this example, if the context information of the UE 1 exists in the AMF 3 but the context information of the UE 2 does not exist in the AMF 3, step 803 is performed; or if the context information of the UE 1 and the context information of the UE 2 do not exist in the AMF 3, step 804 is performed.

Step 803: The AMF 3 selects the UE 1 as the ranging initiator terminal.

In this step, an example in which the context information of the UE 1 exists in the AMF 3 is used. If the context information of the UE 2 exists in the AMF 3 but the context information of the UE 1 does not exist in the AMF 3, the AMF 3 selects the UE 2 as the ranging initiator terminal. If the context information of the UE 1 and the context information of the UE 2 exist in the AMF 3, the AMF 3 may select the UE 1 or the UE 2 as the ranging initiator terminal.

Step 804: The AMF 3 determines whether a same LMF can be selected for the UE 3 and one of the UE 1 and the UE 2, and if the same LMF can be selected for the UE 3 and one of the UE 1 and the UE 2, proceeds to step 805; or if the same LMF cannot be selected for the UE 3 and one of the UE 1 and the UE 2, proceeds to step 807.

In this step, the AMF 3 may interact with the NRF by using UDM to obtain candidate LMFs of the UE 1 and the UE 2, so as to determine, based on the candidate LMFs of the UE 1 and the UE 2, whether the AMF 3 can select the same LMF for the UE 3 and one of the UE 1 and the UE 2. For example, the process may include step 804a to step 804e.

Step 804a: The AMF 3 sends a query request to the UDM, where the query request may carry the UE 1 ID and the UE 2 ID to request identifiers of serving AMFs of the UE 1 and the UE 2.

Step 804b: The UDM returns a query response to the AMF 3, where the query response may carry an identifier (UE 1 AMF ID) of the serving AMF of the UE 1 and an identifier (UE 2 AMF ID) of the serving AMF of the UE 2. Optionally, the query response may further carry registration area information of the UE 1 and the UE 2.

In a possible alternative solution of step 804a to step 804b, the AMF 3 sends, to the UDM, a query request 1 carrying the identifier of the UE 1, and receives a query response 1 that is returned by the UDM and that carries the identifier of the serving AMF of the UE 1. Optionally, the query response 1 may further include the registration area information of the UE 1. The AMF 3 sends, to the UDM, a query request 2 carrying the identifier of the UE 2, and receives a query response 2 that is returned by the UDM and that carries the identifier of the serving AMF of the UE 2. Optionally, the query response 2 may further include the registration area information of the UE 2.

Step 804c: The AMF 3 sends a query request to the NRF to request a candidate LMF of each ranging terminal. The query request may carry the UE 1 AMF ID and the UE 2 AMF ID, may further carry the registration area information of the UE 1 and the registration area information of the UE 2, and may further carry information such as an LMF type indication.

Step 804d: The NRF returns a query response to the AMF 3, where the query response may carry an identifier of the candidate LMF of the UE 1 and an identifier of the candidate LMF of the UE 2. There may be one or more candidate LMFs.

In a possible alternative solution of step 804c to step 804d, the AMF 3 sends, to the NRF, a query request 1 carrying the identifier of the serving AMF of the UE 1, and receives a query response 1 that is returned by the NRF and that carries the identifier of the candidate LMF of the UE 1. Optionally, the query request 1 may further include the registration area information of the UE 1. The AMF 3 sends, to the NRF, a query request 2 carrying the identifier of the serving AMF of the UE 2, and receives a query response 2 that is returned by the NRF and that carries the identifier of the candidate LMF of the UE 2. Optionally, the query request 2 may further include the registration area information of the UE 2.

In another possible alternative solution of step 804c to step 804d, the AMF 3 sends a query request to the NRF to request to determine whether the AMF 3 can select a same LMF for the UE 3 and the ranging initiator terminal. The query request may carry the UE 1 AMF ID and the UE 2 AMF ID, may further carry an identifier of the AMF 3, may further carry the registration area information of the UE 1 and the registration area information of the UE 2, and may further carry information such as an LMF type indication. The NRF returns a query response to the AMF 3, where the query response includes second information. If the one or more candidate LMFs of the UE 1 and the one or more candidate LMFs of the UE 3 have an intersection, the second information may include the identifier of the UE 1, and optionally, may further include a confirmation indication. After receiving the second information, the AMF 3 uses the UE 1 as the ranging initiator terminal. If the one or more candidate LMFs of the UE 2 and the one or more candidate LMFs of the UE 3 have an intersection, the second information may include the identifier of the UE 2, and optionally, may further include a confirmation indication, after receiving the second information, the MAF 3 may use the UE 2 as the ranging initiator terminal. If the candidate LMFs of the UE 1 and the UE 2 both have an intersection with the one or more candidate LMFs of the UE 3, the second information may include the identifier of the UE 1 or the UE 2. After receiving the second information, the LMF 3 may use a corresponding ranging terminal as the ranging initiator terminal based on the identifiers of the UEs included in the second information.

Optionally, the identifier of the AMF 3 in the query request is optional. In some scenarios, because the positioning request is from the AMF 3, the LMF may know, by default, that an intersection of candidate LMFs of a ranging terminal and a positioning request terminal is queried, and may automatically obtain the AMF 3 ID.

In another possible alternative solution of step 804c to step 804d, the AMF 3 sends, to the NRF, a query request 1 carrying the serving AMF of the UE 1. Optionally, the query request 1 may further carry information such as the registration area information of the UE 1 and an LMF type indication. The NRF returns a query response 1 to the AMF 3. The query response 1 includes second information, indicating whether the one or more candidate LMFs of the UE 1 and the one or more candidate LMFs of the UE 3 have an intersection. The AMF 3 sends, to the NRF, a query request 2 carrying the serving AMF of the UE 1. Optionally, the query request 2 may further carry information such as the registration area information of the UE 2 and an LMF type indication. The NRF returns a query response 2 to the AMF 3. The query response 2 includes first information, indicating whether the one or more candidate LMFs of the UE 2 and the one or more candidate LMFs of the UE 3 have an intersection.

Step 804e: The AMF 3 determines whether the one or more candidate LMFs of the UE 3 have an intersection with the one or more candidate LMFs of the UE 1 or the UE 2. If the one or more candidate LMFs of the UE 3 have an intersection with the one or more candidate LMFs of the UE 1, it indicates that the AMF 3 can select a same LMF for the UE 3 and the UE 1, and step 805 is performed. Alternatively, if the one or more candidate LMFs of the UE 3 do not have an intersection with the one or more candidate LMFs of the UE 1 or the one or more candidate LMFs of the UE 2, step 806 is performed.

In this step, if the AMF 3 receives the candidate LMFs of the UE 1, the UE 2, and the UE 3, the AMF 3 may determine, based on the candidate LMFs of the UE 1, the UE 2, and the UE 3, whether the one or more candidate LMFs of the UE 3 have an intersection with the one or more candidate LMFs of the UE 1 or the UE 2. If the AMF 3 receives the second information, the AMF 3 may directly determine, based on the second information, whether the one or more candidate LMFs the UE 3 have an intersection with the one or more candidate LMFs of the UE 1 or the UE 2.

Step 805: The LMF 3 selects the UE 1 as the ranging initiator terminal, and proceeds to step 807.

In this step, an example in which the one or more candidate LMFs of the UE 1 have an intersection with the one or more candidate LMFs of the UE 3 is used. If the one or more candidate LMFs of the UE 2 have an intersection with the one or more candidate LMFs of the UE 3, the AMF 3 selects the UE 2 as the ranging initiator terminal. If the candidate LMFs of the UE 1 and the UE 2 both have an intersection with the one or more candidate LMFs of the UE 3, the AMF 3 may select the UE 1 or the UE 2 as the ranging initiator terminal.

Step 806: The AMF 3 randomly selects one terminal from the UE 1 and the UE 2 as the ranging initiator terminal, and proceeds to step 807.

In this example, an example in which the UE 1 is selected as the ranging initiator terminal is used.

Step 807: The AMF 3 selects the LMF 3, and sends a positioning request to the LMF 3, where the positioning request may carry identifiers of the UE 1 and the UE 2 and indication information of the ranging initiator terminal. Then, step 808 or step 809 is performed.

Step 808: The LMF 3 initiates and performs a ranging (ranging) operation between the UE 1 and the UE 2, and then proceeds to step 810.

The AMF 3 may select an LMF from an intersection of the candidate LMFs of the UE 3 and the UE 1. In this example, the intersection includes the LMF 3. Therefore, the AMF 3 selects the LMF 3.

This step may include an information exchange process of a plurality of steps, and may involve the serving AMFs of the UE 1 and the UE 2.

Step 809: The AMF 3 indicates, by using a GMLC, the ranging initiator terminal to perform a ranging operation, and then proceeds to step 810.

If the AMF 3 selects either the UE 1 or the UE 2 as the ranging initiator terminal, the LMF selected by the AMF 3 cannot directly send a request to the ranging initiator terminal to indicate to perform the ranging (ranging) operation between the UE 1 and the UE 2. Therefore, the GMLC is used to indicate the ranging initiator terminal to perform the ranging operation.

Optionally, step 809 may include step 809a to step 809e.

Step 809a: As a ranging (ranging) requester, the LMF 3 sends a location request to a serving AMF (AMF 1) of the UE 1 by using the GMLC 3.

Step 809b: The AMF 1 initiates a ranging (ranging) positioning request of the UE 1 to the LMF 1 to request a ranging (ranging) result between the UE 1 and the UE 2.

Step 809c: The LMF 1 initiates to perform ranging (ranging) between the UE 1 and the UE 2. The process may involve the LMF 1, the AMF 1, the UE 1, and the UE 2, and optionally, may further involve a RAN.

Step 809d: The LMF 1 returns the ranging (ranging) result to the AMF 1.

Step 809e: The AMF 1 returns the ranging (ranging) result to the LMF 3 by using a GMLC 1.

Step 810: The LMF 3 sends a positioning response to the AMF 3, where the positioning response may carry the ranging result.

Step 811a: If ranging is triggered by an AF (refer to step 801a), the AMF 3 sends the ranging result to the AF by using the GMLC 3 and an NEF.

Step 811b: If ranging is triggered by the UE 3 (refer to step 801b), the AMF 3 sends the ranging result to the UE 3. For example, the ranging result may be sent to the UE 3 by using a downlink NAS message.

The foregoing is described by using three terminals as an example. In a scenario of two terminals, the LMF may also select the ranging initiator terminal based on a principle of the foregoing procedure. In this scenario, the LMF 3 may select a positioning request terminal as the ranging initiator terminal. In a scenario with more than two ranging terminals, the LMF may also select the ranging initiation terminal based on the principle of the foregoing procedure.

In another possible implementation, the AMF 3 may first select the LMF 3 for the UE 3, and then determine the ranging initiator terminal. In this case, the AMF 3 may obtain the candidate LMFs of the UE 1 and the UE 2 (a method for obtaining the candidate LMFs of the UE 1 and the UE 2 is the same as the foregoing procedure). If the AMF determines that the one or more candidate LMFs of the UE 1 include the LMF 3, the UE 1 may be used as the ranging initiator terminal. If the AMF determines that the one or more candidate LMFs of the UE 2 include the LMF 3, the UE 2 may be used as the ranging initiator terminal. If the AMF determines that the candidate LMFs of the UE 1 and the UE 2 do not include the LMF 3, the UE 1 or the UE 2 may be used as the ranging initiator terminal. For other steps, refer to the foregoing process.

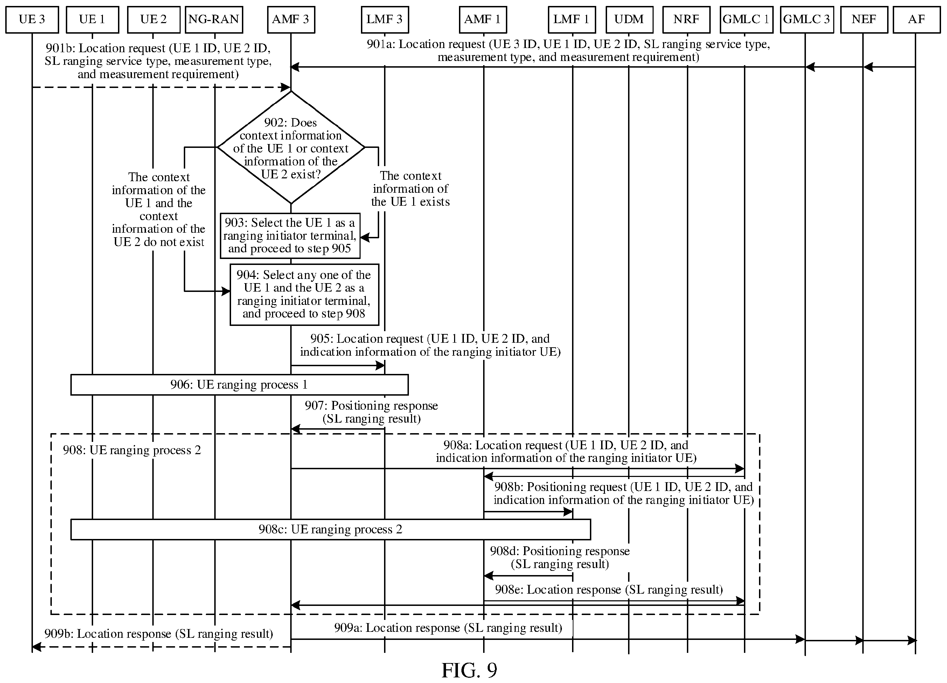

FIG. 9 is a diagram of an information exchange procedure in a third example according to an embodiment of this application. In the third example, a positioning request terminal is a UE 3, and ranging terminals include a UE 1 and a UE 2. An AMF 1 is a serving AMF of the UE 1, an AMF 3 is a serving AMF of the UE 3, an LMF of the UE 1 is represented as an LMF 1, and an LMF of the UE 3 is represented as an LMF 3. Because a ranging (ranging) requirement is visible to an AMF, the AMF selects a ranging initiator terminal. As shown in the figure, the procedure may include the following steps.

Step 901a: An AF triggers a ranging requirement. For an implementation of this step, refer to related descriptions in FIG. 8A, FIG. 8B, and FIG. 8C.

Step 901b: The UE 3 triggers a ranging requirement. For an implementation of this step, refer to related descriptions in FIG. 8A, FIG. 8B, and FIG. 8C.

Step 902: The AMF 3 checks whether context information of the UE 1 or context information of the UE 2 exists; and performs step 903 if the context information of the UE 1 exists, or performs step 904 if the context information of the UE 1 and the context information of the UE 2 do not exist.

For an implementation of this step, refer to related descriptions in FIG. 8A, FIG. 8B, and FIG. 8C.

Step 903: The AMF 3 selects the UE 1 as the ranging initiator terminal. Then, step 905 is performed.

In this step, an example in which the context information of the UE 1 exists in the AMF 3 is used. If the context information of the UE 2 exists in the AMF 3 but the context information of the UE 1 does not exist in the AMF 3, the AMF 3 selects the UE 2 as the ranging initiator terminal. If the context information of the UE 1 and the context information of the UE 2 exist in the AMF 3, the AMF 3 may select the UE 1 or the UE 2 as the ranging initiator terminal.

Step 904: The AMF 3 randomly selects one terminal from the UE 1 and the UE 2 as the ranging initiator terminal, and proceeds to step 908.

In this example, an example in which the UE 1 is selected as the ranging initiator terminal is used.

Step 905: The AMF 3 selects the LMF 3, and sends a positioning request to the LMF 3, where the positioning request may carry identifiers of the UE 1 and the UE 2 and indication information of the ranging initiator terminal. Then, step 906 or step 907 is performed.

Step 906: The LMF 3 initiates and performs a ranging (ranging) operation between the UE 1 and the UE 2, and then proceeds to step 908.

If the context information of the UE 1 exists in the AMF 3, the LMF 3 may send a request to the UE 1 to indicate to perform the ranging (ranging) operation between the UE 1 and the UE 2.

This step may include an information exchange process of a plurality of steps, and may involve the serving AMFs of the UE 1 and the UE 2.

Step 907: The LMF 3 sends a ranging result to the AMF 3, and then proceeds to step 909a or 909b.

Step 908: The AMF 3 indicates, by using a GMLC, the ranging initiator terminal to perform a ranging operation, and then proceeds to step 909a or 909b.

If the AMF 3 selects either the UE 1 or the UE 2 as the ranging initiator terminal, the LMF selected by the AMF 3 cannot directly send a request to the ranging initiator terminal to indicate to perform the ranging (ranging) operation between the UE 1 and the UE 2. Therefore, the GMLC is used to indicate the ranging initiator terminal to perform the ranging operation.

Optionally, step 908 may include step 908a to step 908e.

Step 908a: As a ranging (ranging) requester, the AMF 3 sends a location request to a serving AMF (AMF 1) of the UE 1 by using the GMLC 3.

Step 908b: The AMF 1 initiates a ranging (ranging) positioning request of the UE 1 to the LMF 1 to request a ranging (ranging) result between the UE 1 and the UE 2.

Step 908c: The LMF 1 initiates to perform ranging (ranging) between the UE 1 and the UE 2. The process may involve the LMF 1, the AMF 1, the UE 1, and the UE 2, and optionally, may further involve a RAN.

Step 908d: The LMF 1 returns an F1 ranging (ranging) result to the AMF 3.

Step 908e: The AMF 1 returns a ranging (ranging) result to the AMF 3 by using the GMLC 1.

Step 909a: If ranging is triggered by an AF (refer to step 901a), the AMF 3 sends the ranging result to the AF by using the GMLC 3 and an NEF.

Step 909b: If ranging is triggered by the UE 3 (refer to step 901b), the AMF 3 sends the ranging result to the UE 3. For example, the ranging result may be sent to the UE 3 by using a downlink NAS message.

The foregoing is described by using three terminals as an example. In a scenario of two terminals, the LMF may also select the ranging initiator terminal based on a principle of the foregoing procedure. In this scenario, the LMF 3 may select a positioning request terminal as the ranging initiator terminal. In a scenario with more than two ranging terminals, the LMF may also select the ranging initiation terminal based on the principle of the foregoing procedure.

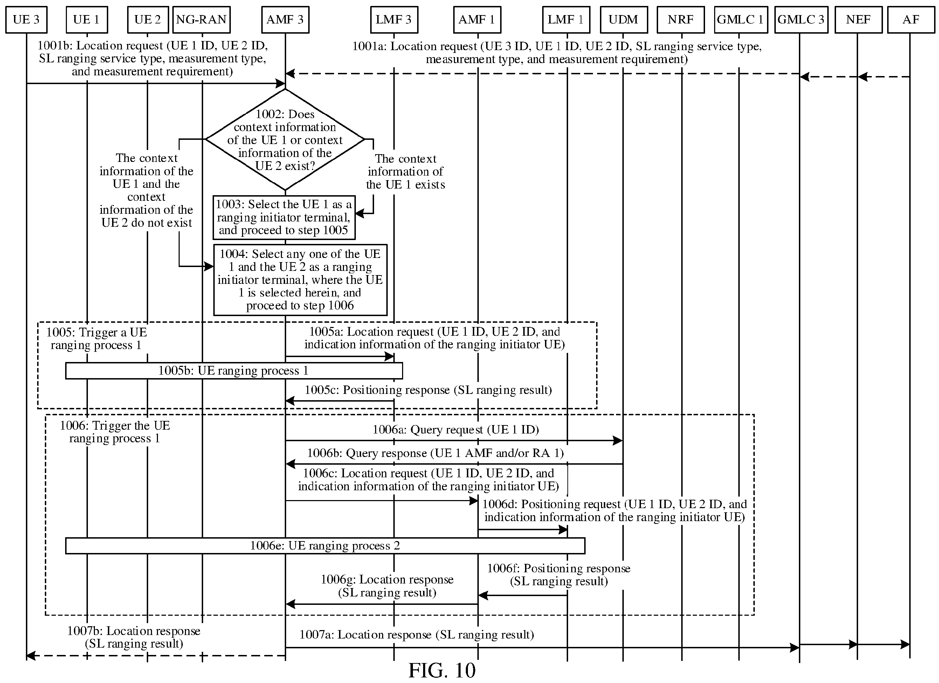

FIG. 10 is a diagram of an information exchange procedure in a fourth example according to an embodiment of this application. In the fourth example, a positioning request terminal is a UE 3, and ranging terminals include a UE 1 and a UE 2. An AMF 1 is a serving AMF of the UE 1, an AMF 3 is a serving AMF of the UE 3, an LMF of the UE 1 is represented as an LMF 1, and an LMF of the UE 3 is represented as an LMF 3. Because a ranging (ranging) requirement is visible to an AMF, the AMF selects a ranging initiator terminal. The AMF also serves as a ranging requester (a network element inside a network serves as a requester) and directly sends a request to an AMF of the ranging initiator terminal through an N14 interface. The AMF of the ranging initiator terminal sends a positioning request to an LMF of the ranging initiator terminal. As shown in the figure, the procedure may include the following steps.

Step 1001a: An AF triggers a ranging requirement. For an implementation of this step, refer to related descriptions in FIG. 9.

Step 1001b: The UE 3 triggers a ranging requirement. For an implementation of this step, refer to related descriptions in FIG. 9.

Step 1002: The AMF 3 checks whether context information of the UE 1 or context information of the UE 2 exists; and performs step 1003 if the context information of the UE 1 exists, or performs step 1004 if the context information of the UE 1 and the context information of the UE 2 do not exist.

For an implementation of this step, refer to related descriptions in FIG. 9.

Step 1003: The AMF 3 selects the UE 1 as the ranging initiator terminal. Then, step 1005 is performed.

In this step, an example in which the context information of the UE 1 exists in the AMF 3 is used. If the context information of the UE 2 exists in the AMF 3 but the context information of the UE 1 does not exist in the AMF 3, the AMF 3 selects the UE 2 as the ranging initiator terminal. If the context information of the UE 1 and the context information of the UE 2 exist in the AMF 3, the AMF 3 may select the UE 1 or the UE 2 as the ranging initiator terminal.

Step 1004: The AMF 3 randomly selects one terminal from the UE 1 and the UE 2 as the ranging initiator terminal, and proceeds to step 1006.

In this example, an example in which the UE 1 is selected as the ranging initiator terminal is used.

Step 1005: Trigger a UE ranging process 1.

For example, step 1005 may include step 1005a, step 1005b, and step 1005c.

Step 1005a: The AMF 3 selects the LMF 3, and sends a positioning request to the LMF 3, where the positioning request may carry identifiers of the UE 1 and the UE 2 and indication information of the ranging initiator terminal.

Step 1005b: The LMF 3 initiates and performs a ranging (ranging) operation between the UE 1 and the UE 2, and then proceeds to step 1007a or 1007b.

If the context information of the UE 1 exists in the AMF 3, the LMF 3 may send a request to the UE 1 to indicate to perform the ranging (ranging) operation between the UE 1 and the UE 2.

This step may include an information exchange process of a plurality of steps, and may involve the serving AMFs of the UE 1 and the UE 2.

Step 1005c: The LMF 3 sends a ranging result to the AMF 3, and then proceeds to step 1007a or 1007b.

Step 1006: Trigger a UE ranging process 2.

For example, step 1006 may include step 1006a to step 1006g.

Step 1006a: The AMF 3 sends a query request to UDM to request to obtain an identifier of the serving AMF of the UE 1. The query request may include an identifier of the UE 1.

Step 1006b: The UDM returns a query response to the AMF 3, where the query response may carry the identifier of the serving AMF (that is, the AMF 1) of the UE 1, and optionally, may further carry registration area information of the UE 1.

Step 1006c: The AMF 3 sends a location request to the AMF 1, where the location request may carry identifiers of the UE 1 and the UE 2, and optionally, further carries indication information indicating that the UE 1 is used as the ranging initiator terminal.

Step 1006d: The AMF 1 initiates a ranging (ranging) positioning request of the UE 1 to the LMF 1 to request a ranging (ranging) result between the UE 1 and the UE 2.

Step 1006e: The LMF 1 initiates to perform ranging (ranging) between the UE 1 and the UE 2. The process may involve the LMF 1, the AMF 1, the UE 1, and the UE 2, and optionally, may further involve a RAN.

Step 1006f: The LMF 1 returns the ranging (ranging) result to the AMF 1.

Step 1006g: The AMF 1 returns the ranging (ranging) result to the AMF 3.

Step 1007a: If ranging is triggered by an AF (refer to step 1001a), the AMF 3 sends the ranging result to the AF by using the GMLC 3 and an NEF.

Step 1007b: If ranging is triggered by the UE 3 (refer to step 1001b), the AMF 3 sends the ranging result to the UE 3. For example, the ranging result may be sent to the UE 3 by using a downlink NAS message.

The foregoing is described by using three terminals as an example. In a scenario of two terminals, the LMF may also select the ranging initiator terminal based on a principle of the foregoing procedure. In this scenario, the LMF 3 may select a positioning request terminal as the ranging initiator terminal. In a scenario with more than two ranging terminals, the LMF may also select the ranging initiation terminal based on the principle of the foregoing procedure.

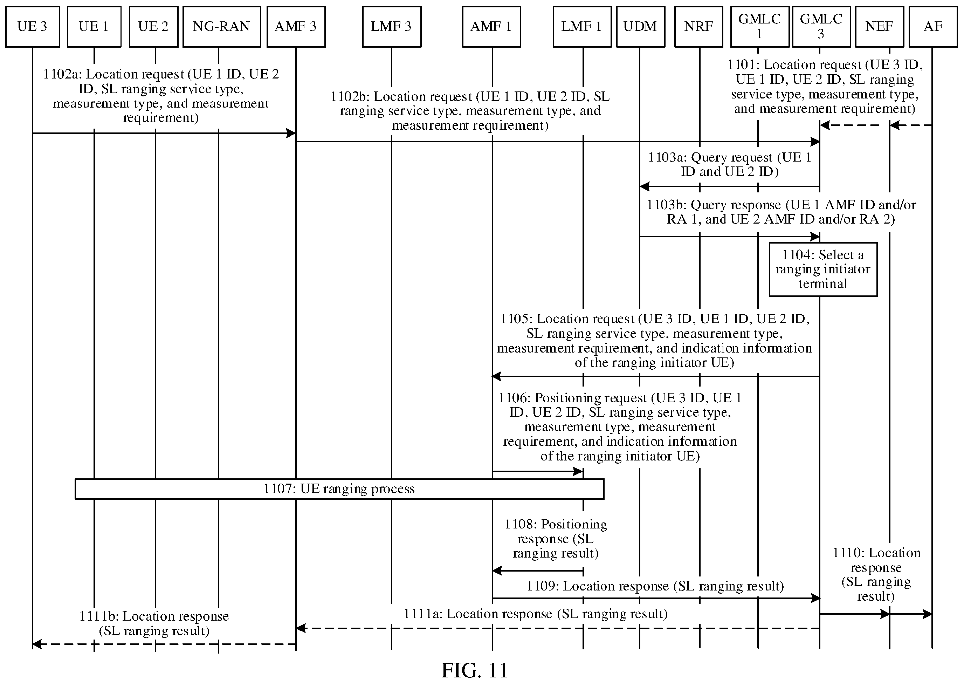

FIG. 11 is a diagram of an information exchange procedure in a fifth example according to an embodiment of this application. In the fifth example, a positioning request terminal is a UE 3, and ranging terminals include a UE 1 and a UE 2. An AMF 1 is a serving AMF of the UE 1, an AMF 3 is a serving AMF of the UE 3, an LMF of the UE 1 is represented as an LMF 1, and an LMF of the UE 3 is represented as an LMF 3. A GMLC of the positioning request terminal selects a ranging initiator terminal. As shown in the figure, the procedure may include the following steps.

Step 1101: An AF triggers a ranging requirement.

Optionally, the AF sends a location request to the AMF 3 to request an SL ranging service. The location request may carry identifiers (UE 1 ID and UE 2 ID) of the ranging terminals UE 1 and UE 2, optionally, may further carry an identifier (UE 3 ID) of the positioning request terminal UE 3, and further, may carry information such as an SL ranging (ranging) service type, a measurement type, and an SL ranging requirement (SL ranging requirement).

Optionally, the request triggered by the AF may be sent to the GMLC (that is, GMLC 3) of the positioning request terminal by using an NEF.

Step 1102a: The UE 3 or the UE 1 triggers a ranging requirement.

For example, the UE 3 triggers the ranging requirement. The UE 3 sends a location request to the AMF 3 to request the SL ranging service. The location request may carry identifiers (UE 1 ID and UE 2 ID) of the ranging terminals UE 1 and UE 2, and further, may carry information such as an SL ranging (ranging) service type, a measurement type, and an SL ranging requirement (SL ranging requirement).

Step 1102b: The AMF 3 sends a location request to the GMLC 3 to request the SL ranging service. The location request may carry identifiers (UE 1 ID and UE 2 ID) of the ranging terminals UE 1 and UE 2, optionally carry a UE 3 ID, and further, may carry information such as an SL ranging (ranging) service type, a measurement type, and an SL ranging requirement (SL ranging requirement).

In this step, the AMF 3 serves as a ranging requester, and sends the ranging requirement to the GMLC 3 by using a location request message.

Step 1103a: The GMLC 3 sends a query request to UDM, where the query request may carry the UE 1 ID and the UE 2 ID to request identifiers of serving AMFs of the UE 1 and the UE 2.

Step 1103b: The UDM returns a query response to the GMLC 3, where the query response may carry an identifier (UE 1 AMF ID) of the serving AMF of the UE 1 and an identifier (UE 2 AMF ID) of the serving AMF of the UE 2. Optionally, the query response may further carry registration area information of the UE 1 and the UE 2.

In a possible alternative solution of step 1103a to step 1103b, the GMLC 3 sends, to the UDM, a query request 1 carrying the identifier of the UE 1, and receives a query response 1 that is returned by the UDM and that carries the identifier of the serving AMF of the UE 1. Optionally, the query response 1 may further include the registration area information of the UE 1. The GMLC 3 sends, to the UDM, a query request 2 carrying the identifier of the UE 2, and receives a query response 2 that is returned by the UDM and that carries the identifier of the serving AMF of the UE 2. Optionally, the query response 2 may further include the registration area information of the UE 2.

Optionally, the GMLC 3 may further obtain reachability information of the UE 1 and reachability information of the UE 2, UDM context information of the UE 1 and UDM context information of the UE 2, and the like from the UDM, and use the obtained information as a basis for selecting the ranging initiator terminal.

Step 1104: The GMLC 3 selects the ranging initiator terminal from the UE 1 and the UE 2 based on the information obtained from the UDM.

Optionally, the GMLC 3 may select a test initiator terminal based on reachability of the UE 1 and the UE 2 and subscription information of the UE 1 and the UE 2 obtained from the UDM.

In this example, an example in which the UE 1 is selected as the ranging initiator terminal is used for description.

Step 1105: The GMLC 3 sends a location request to the serving AMF (the AMF 1) of the ranging initiator terminal UE 1 to request a ranging result between the UE 1 and the UE 2.

Optionally, the location request may carry the identifiers of the UE 1 and the UE 2, and optionally, further carry indication information indicating that the UE 1 is used as the ranging initiator terminal. Further, the location request may carry information such as an SL ranging (ranging) service type, a measurement type, and an SL ranging requirement.

Optionally, if the AMF 1 is not in a service range of the current GMLC 3, the GMLC 3 may select the GMLC 1, and initiate a location request to the AMF 1 by using the GMLC 1.

Step 1106: The AMF 1 sends a positioning request to the LMF 1 to request the ranging result between the UE 1 and the UE 2.

Optionally, the location request may carry the identifiers of the UE 1 and the UE 2 and indication information indicating that the UE 1 is used as the ranging initiator terminal. Further, the location request may carry information such as an SL ranging (ranging) service type, a measurement type, and an SL ranging requirement.

Step 1107: The LMF 1 initiates to perform a ranging operation between the UE 1 and the UE 2. The process may involve the LMF 1, the AMF 1, the UE 1, and the UE 2, and optionally, may further involve a RAN.

Step 1108: The LMF 1 returns the ranging (ranging) result to the AMF 1.

Step 1109: The AMF 1 returns the ranging (ranging) result to the LMF 3 by using the GMLC 3.

Step 1110: If ranging is triggered by the AF (refer to step 1101), the GMLC 3 sends the ranging result to the AF through an NEF.

Step 1111a: If ranging is triggered by the UE 3 (refer to steps 1102a and 1102b)**,** the GMLC 3 sends the ranging result to the AMF 3.

Step 1111b: The AMF 3 sends the ranging result to the UE 3.

The foregoing is described by using three terminals as an example. In a scenario of two terminals, the LMF may also select the ranging initiator terminal based on a principle of the foregoing procedure. In this scenario, the LMF 3 may select a positioning request terminal as the ranging initiator terminal. In a scenario with more than two ranging terminals, the LMF may also select the ranging initiation terminal based on the principle of the foregoing procedure.

According to the procedure shown in any one of FIG. 7A, FIG. 7B, and FIG. 7C to FIG. 11**,** when the AMFs and/or the LMFs of the UE 1, the UE 2, and the UE 3 are different, a proper UE is selected from the UE 1 and the UE 2 as a ranging initiator UE (initiator UE), and the UE is used as an initiator initiating a ranging operation on a PC5 interface, thereby avoiding interactions between a plurality of AMFs and/or LMFs, and reducing complexity.

Based on a same technical concept, an embodiment of this application further provides a communication apparatus. The communication apparatus may perform a procedure performed by the LMF 3 in the procedure shown in any one of FIG. 5 to FIG. 9.

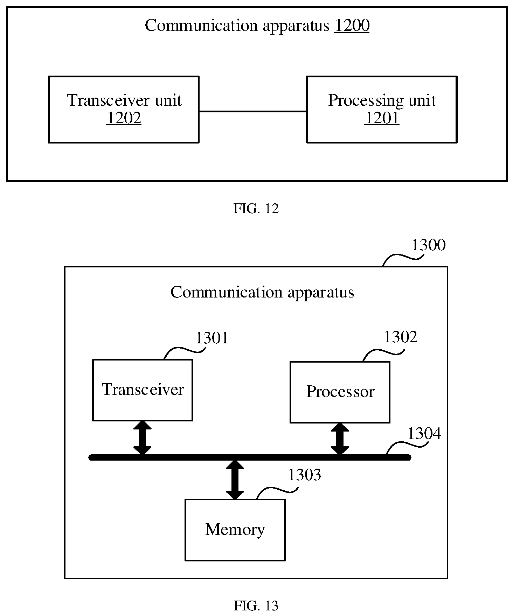

As shown in FIG. 12, the communication apparatus 1200 may include a processing unit 1201 and a transceiver unit 1202. The transceiver unit 1202 is coupled to the processing unit 1201.

The transceiver unit 1202 is configured to receive a first request, where the first request is used to request to perform positioning based on at least one ranging terminal.

The processing unit 1201 is configured to: determine a ranging initiator terminal, where the ranging initiator terminal is one of the at least one ranging terminal, and the ranging initiator terminal meets a first requirement; and indicate, by using the transceiver unit 1202, the ranging initiator terminal to initiate ranging.

Optionally, the processing unit 1201 is specifically configured to determine a first terminal as the ranging initiator terminal, where information about the first terminal exists in the first network element, and the first terminal is one of the at least one ranging terminal.

When the communication apparatus 1200 performs the procedure performed by the first network element (for example, the LMF) in FIG. 5, FIG. 6, or FIG. 7A, FIG. 7B, and FIG. 7C, functions of the foregoing functional modules may include:
The processing unit 1201 is specifically configured to: if information about any one of the at least one ranging terminal does not exist in the communication apparatus, determine, by the communication apparatus, a second terminal as the ranging initiator terminal, where the second terminal is one of the at least one ranging terminal.

Optionally, the processing unit 1201 is specifically configured to: obtain an identifier of a serving access and mobility management function AMF of the at least one ranging terminal from UDM by using the transceiver unit 1202; obtain one or more candidate LMFs of the at least one ranging terminal from a network repository function NRF based on the identifier of the serving AMF of the at least one ranging terminal and by using the transceiver unit 1202; and if one or more candidate LMFs of the second terminal include the communication apparatus, determine that the communication apparatus can be used as an LMF of the second terminal, and determine the second terminal as the ranging initiator terminal.

Optionally, the processing unit 1201 is specifically configured to send a first query request to the NRF by using the transceiver unit 1202, where the first query request carries the identifier of the serving AMF of the at least one ranging terminal. The transceiver unit 1202 receives a first query response sent by the NRF, where the first query response carries one or more identifiers of the one or more candidate LMFs of the at least one ranging terminal.

Optionally, the processing unit 1201 is specifically configured to: obtain the identifier of the serving AMF of the at least one ranging terminal from UDM by using the transceiver unit 1202; obtain first information from the NRF based on the identifier of the serving AMF of the at least one ranging terminal by using the transceiver unit 1202, where the first information indicates that the communication apparatus can be used as the LMF of the second terminal; and determine the second terminal as the ranging initiator terminal based on the first information.

Optionally, the processing unit 1201 is specifically configured to send a second query request to the NRF by using the transceiver unit 1202, where the second query request carries the identifier of the serving AMF of the at least one ranging terminal. The transceiver unit 1202 is specifically configured to receive a second query response sent by the NRF, where the second query response carries the first information.

Optionally, the second query request carries an identifier of the communication apparatus or first indication information, the identifier of the communication apparatus or the first indication information indicates: If a ranging terminal meeting a first condition exists in the at least one ranging terminal, the communication apparatus can be used as an LMF of the ranging terminal meeting the first condition, and the first information is returned. One or more candidate LMFs of the ranging terminal meeting the first condition include the communication apparatus, and the ranging terminal meeting the first condition includes the second terminal.

Optionally, the processing unit 1201 is specifically configured to send a third query request to the UDM by using the transceiver unit 1202, where the third query request carries an identifier of the at least one ranging terminal. The transceiver unit 1202 is specifically configured to receive a third query response sent by the UMD, where the third query response carries the identifier of the serving AMF of the at least one ranging terminal.

When the communication apparatus 1200 performs the procedures performed by the AMF 3 in FIG. 5, FIG. 6, and FIG. 8A, FIG. 8B, and FIG. 8C to FIG. 10, functions of the foregoing functional modules may include:
The processing unit 1201 is specifically configured to: if information about any one of the at least one ranging terminal does not exist in the communication apparatus, determine a third terminal as the ranging initiator terminal, where the third terminal is one of the at least one ranging terminal.

Optionally, the processing unit 1201 is specifically configured to: obtain the identifier of the serving AMF of the at least one ranging terminal from the UDM by using the transceiver unit 1202; obtain one or more candidate LMFs of the at least one ranging terminal based on the identifier of the serving AMF of the at least one ranging terminal from the NRF by using the transceiver unit 1202; and if one or more candidate LMFs of the third terminal include an LMF of a positioning request terminal, determine the third terminal as the ranging initiator terminal.

Optionally, the processing unit 1201 is specifically configured to: obtain the identifier of the serving AMF of the at least one ranging terminal from the UDM by using the transceiver unit 1202; obtain one or more candidate LMFs of the at least one ranging terminal and the one or more candidate LMFs of the positioning request terminal from the NRF based on the identifier of the serving AMF of the at least one ranging terminal and an identifier of the serving AMF of the positioning request terminal by using the transceiver unit 1202, where the serving AMF of the positioning request terminal is the communication apparatus; and if the one or more candidate LMFs of the third terminal and the one or more candidate LMFs of the positioning request terminal have an intersection, determine the third terminal as the ranging initiator terminal.

Optionally, the processing unit 1201 is specifically configured to send a fourth query request to the NRF by using the transceiver unit 1202, where the fourth query request carries the identifier of the serving AMF of the at least one ranging terminal. The transceiver unit 1202 is specifically configured to receive a first query response sent by the NRF, where the first query response carries one or more identifiers of the one or more candidate LMFs of the at least one ranging terminal.

Optionally, the processing unit 1201 is specifically configured to: obtain the identifier of the serving AMF of the at least one ranging terminal from the UDM by using the transceiver unit 1202; obtain second information from the NRF based on the identifier of the serving AMF of the at least one ranging terminal by using the transceiver unit 1202, where the second information indicates that the one or more candidate LMFs of the third terminal include the LMF of the positioning request terminal; and determine the third terminal as the ranging initiator terminal based on the second information.

Optionally, the processing unit 1201 is specifically configured to: obtain the identifier of the serving AMF of the at least one ranging terminal from the UDM by using the transceiver unit 1202; obtain second information from the NRF based on the identifier of the respective serving AMF of the at least one ranging terminal and the identifier of the serving AMF of the positioning request terminal by using the transceiver unit 1202, where the second information indicates that the one or more candidate LMFs of the third terminal and the one or more candidate LMFs of the positioning requesting terminal have an intersection, and the serving AMF of the positioning request terminal is the communication terminal; and determine the third terminal as the ranging initiator terminal based on the second information.

Optionally, the processing unit 1201 is specifically configured to send a fifth query request to the NRF by using the transceiver unit, where the fifth query request carries at least the identifier of the serving AMF of the at least one ranging terminal. The transceiver unit 1202 is specifically configured to receive a fifth query response sent by the NRF, where the fifth query response carries the second information.

Optionally, the fifth query request carries the identifier of the communication apparatus or the second indication information, and the identifier of the communication apparatus or the second indication information indicates: if a ranging terminal meeting a second condition exists in the at least one ranging terminal, the second information is returned, where one or more candidate LMFs of the ranging terminal meeting the second condition and the one or more candidate LMFs of the positioning request terminal have an intersection; or one or more candidate LMFs of the ranging terminal meeting the second condition include the LMF of the positioning request terminal, where the ranging terminal meeting the second condition includes the third terminal.

Optionally, the processing unit 1201 is specifically configured to send a sixth query request to the UDM by using the transceiver unit, where the sixth query request carries an identifier of the at least one ranging terminal. The transceiver unit 1202 is specifically configured to receive a sixth query response sent by the UMD, where the sixth query response carries the identifier of the serving AMF of the at least one ranging terminal.

Optionally, the processing unit 1201 is specifically configured to send a second request to a second LMF by using the transceiver unit 1202, where the second request carries indication information of the ranging initiator terminal.

The communication apparatus 1200 can implement the method steps in the foregoing method embodiments, and can achieve a same technical effect. A part the same as the method embodiments in this embodiment and beneficial effects are not described in detail herein again.

For ease of understanding, FIG. 13 shows only a structure necessary for a communication apparatus 1300 to perform the method shown in this application, and no limitation is imposed on that the communication apparatus may have more components in this application. The communication apparatus 1300 may be configured to perform steps performed by a related network element in the foregoing method embodiments. For example, the related network element may be a first network element (for example, a first LMF, a first AMF, a first GMLC, and the like).

The communication apparatus 1300 may include a transceiver 1301, a memory 1303, and a processor 1302. The transceiver 1301, the memory 1303, and the processor 1302 may be connected by using a bus 1304. The transceiver 1301 may be used by the communication apparatus to perform communication, for example, to send or receive a signal. The memory 1303 is coupled to the processor 1302, and may be configured to store a program and data that are necessary for implementing functions of the communication apparatus 1300. The memory 1303 and the processor 1302 may be integrated or may be independent of each other.

For example, the transceiver 1301 may be a communication port, for example, a communication port (or referred to as an interface) used for communication between network elements. The transceiver 1301 may also be referred to as a transceiver unit or a communication unit. The processor 1302 may be implemented by using a processing chip or a processing circuit. The transceiver 1301 may receive or send information in a wireless manner or in a wired manner.

In addition, based on an actual use requirement, the communication apparatus provided in embodiments of this application may include a processor, and the processor invokes an external transceiver and/or memory to implement the foregoing functions, steps, or operations. The communication apparatus may further include a memory, and the processor invokes and executes a program stored in the memory to implement the foregoing functions, steps, or operations. Alternatively, the communication apparatus may include a processor and a transceiver (or a communication interface), and the processor invokes and executes a program stored in an external memory to implement the foregoing functions, steps, or operations. Alternatively, the communication apparatus may include a processor, a memory, and a transceiver.

Based on a same concept as that of the foregoing method embodiments, an embodiment of this application further provides a computer-readable storage medium. The computer-readable storage medium stores program instructions (or referred to as a computer program or instructions). When the program instructions are executed by a processor, a computer is enabled to perform the operation performed by the first network element in the foregoing method embodiments and any possible implementation of the foregoing method embodiments.

Based on a same concept as that of the foregoing method embodiments, this application further provides a computer program product, including program instructions. When the computer program product is invoked and executed by a computer, the computer may be enabled to implement the operation performed by the first network element in the foregoing method embodiments and any possible implementation of the foregoing method embodiments.

Based on a same concept as that of the foregoing method embodiments, this application further provides a chip or a chip system. The chip is coupled to a transceiver, and is configured to implement the operation performed by the first network element in the foregoing method embodiments and any possible implementation of the foregoing method embodiments. The chip system may include the chip and components such as a memory and a communication interface.

A person skilled in the art should be aware that embodiments of this application may be provided as methods, systems, or computer program products. Therefore, this application may be in a form of an entire hardware embodiment, an entire software embodiment, or an embodiment combining software and hardware aspects. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that each procedure and/or block in the flowcharts and/or the block diagrams and/or a combination of procedures and/or blocks in the flowcharts and/or the block diagrams may be implemented by using computer program instructions. These computer program instructions may be provided to a processor of a general-purpose computer, a special-purpose computer, an embedded processor, or another programmable data processing device to produce a machine, so that the instructions executed by a processor of a computer or another programmable data processing device generates an apparatus for implementing a function specified in one or more procedures in a flowchart and/or in one or more blocks in a block diagram.

These computer program instructions may also be stored in a computer-readable memory that directs a computer or another programmable data processing device to operate in a particular manner, so that the instructions stored in the computer-readable memory produce an article of manufacture including an instruction apparatus. The instruction apparatus implements a function specified in one or more procedures in a flowchart and/or in one or more blocks in a block diagram.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

Apparently, a person skilled in the art may make various modifications and variations to this application without departing from the protection scope of this application. This application is intended to cover these modifications and variations of this application provided that they fall within the protection scope defined by the following claims and their equivalent technologies.

## Claims

1. A positioning method, comprising:
receiving, by a first network element, a first request, wherein the first request is used to request to perform positioning based on at least one ranging terminal;
determining, by the first network element, a ranging initiator terminal, wherein the ranging initiator terminal is one of the at least one ranging terminal, and the ranging initiator terminal meets a first requirement; and
indicating, by the first network element, the ranging initiator terminal to initiate ranging.

2. The method according to claim 1, wherein the determining, by the first network element, a ranging initiator terminal, wherein the ranging initiator terminal is one of the at least one ranging terminal, and the ranging initiator terminal meets a first requirement, comprises:
determining, by the first network element, a first terminal as the ranging initiator terminal, wherein information about the first terminal exists in the first network element, and the first terminal is one of the at least one ranging terminal.

3. The method according to claim 1, wherein the first network element is a first location management function LMF; and
the determining, by the first network element, a ranging initiator terminal, wherein the ranging initiator terminal is one of the at least one ranging terminal, and the ranging initiator terminal meets a first requirement, comprises:
if information about any one of the at least one ranging terminal does not exist in the first LMF, determining, by the first LMF, a second terminal as the ranging initiator terminal, wherein the second terminal is one of the at least one ranging terminal.

4. The method according to claim 3, wherein the determining, by the first LMF, a second terminal as the ranging initiator terminal comprises:
obtaining, by the first LMF, an identifier of a serving access and mobility management function AMF of the at least one ranging terminal from unified data management UDM;
obtaining, by the first LMF, one or more candidate LMFs of the at least one ranging terminal from a network repository function NRF based on the identifier of the serving AMF of the at least one ranging terminal; and
if one or more candidate LMFs of the second terminal comprise the first LMF, determining that the first LMF can be used as an LMF of the second terminal, and determining the second terminal as the ranging initiator terminal.

5. The method according to claim 4, wherein the obtaining, by the first LMF, one or more candidate LMFs of the at least one ranging terminal from an NRF based on the identifier of the serving AMF of the at least one ranging terminal comprises:
sending, by the first LMF, a first query request to the NRF, wherein the first query request carries the identifier of the serving AMF of the at least one ranging terminal; and
receiving, by the first LMF, a first query response sent by the NRF, wherein the first query response carries one or more identifiers of the one or more candidate LMFs of the at least one ranging terminal.

6. The method according to claim 3, wherein the determining, by the first LMF, a second terminal as the ranging initiator terminal comprises:
obtaining, by the first LMF, an identifier of a serving AMF of the at least one ranging terminal from UDM;
obtaining, by the first LMF, first information from an NRF based on the identifier of the serving AMF of the at least one ranging terminal, wherein the first information indicates that the first LMF can be used as an LMF of the second terminal; and
determining, by the first LMF, the second terminal as the ranging initiator terminal based on the first information.

7. The method according to claim 6, wherein the obtaining, by the first LMF, first information from an NRF based on the identifier of the serving AMF of the at least one ranging terminal comprises:
sending, by the first LMF, a second query request to the NRF, wherein the second query request carries the identifier of the serving AMF of the at least one ranging terminal; and
receiving, by the first LMF, a second query response sent by the NRF, wherein the second query response carries the first information.

8. The method according to claim 7, wherein the second query request carries an identifier of the first LMF or first indication information, and the identifier of the first LMF or the first indication information indicates:
if a ranging terminal meeting a first condition exists in the at least one ranging terminal, the first LMF can be used as an LMF of the ranging terminal meeting the first condition, and the first information is returned, wherein one or more candidate LMFs of the ranging terminal meeting the first condition comprise the first LMF, and the ranging terminal meeting the first condition comprises the second terminal.

9. The method according to any one of claims 4 to 8, wherein the obtaining, by the first LMF, an identifier of a serving AMF of the at least one ranging terminal from UDM comprises:
sending, by the first LMF, a third query request to the UDM, wherein the third query request carries an identifier of the at least one ranging terminal; and
receiving, by the first LMF, a third query response sent by the UMD, wherein the third query response carries the identifier of the serving AMF of the at least one ranging terminal.

10. The method according to claim 1, wherein the first network element is a first AMF; and
the determining, by the first network element, a ranging initiator terminal, wherein the ranging initiator terminal is one of the at least one ranging terminal, and the ranging initiator terminal meets a first requirement, comprises:
if information about any one of the at least one ranging terminal does not exist in the first AMF, determining, by the first AMF, a third terminal as the ranging initiator terminal, wherein the third terminal is one of the at least one ranging terminal.

11. The method according to claim 10, wherein
the determining, by the first AMF, a third terminal as the ranging initiator terminal comprises:
obtaining, by the first AMF, an identifier of a serving AMF of the at least one ranging terminal from UDM;
obtaining, by the first AMF, one or more candidate LMFs of the at least one ranging terminal from an NRF based on the identifier of the serving AMF of the at least one ranging terminal; and
if one or more candidate LMFs of the third terminal comprise an LMF of a positioning request terminal, determining the third terminal as the ranging initiator terminal; or
the determining, by the first AMF, a third terminal as the ranging initiator terminal comprises:
obtaining, by the first AMF, an identifier of a serving AMF of the at least one ranging terminal from UDM;
obtaining, by the first AMF, one or more candidate LMFs of the at least one ranging terminal and one or more candidate LMFs of a positioning request terminal from an NRF based on the identifier of the serving AMF of the at least one ranging terminal and an identifier of a serving AMF of the positioning request terminal, wherein the serving AMF of the positioning request terminal is the first AMF; and
if the one or more candidate LMFs of the third terminal and the one or more candidate LMFs of the positioning request terminal have an intersection, determining the third terminal as the ranging initiator terminal.

12. The method according to claim 11, wherein the obtaining, by the first AMF, one or more candidate LMFs of the at least one ranging terminal from an NRF based on the identifier of the serving AMF of the at least one ranging terminal comprises:
sending, by the first LMF, a fourth query request to the NRF, wherein the fourth query request carries the identifier of the serving AMF of the at least one ranging terminal; and
receiving, by the first LMF, a first query response sent by the NRF, wherein the first query response carries one or more identifiers of the one or more candidate LMFs of the at least one ranging terminal.

13. The method according to claim 10, wherein
the determining, by the first AMF, a third terminal as the ranging initiator terminal comprises:
obtaining, by the first AMF, an identifier of a serving AMF of the at least one ranging terminal from UDM;
obtaining, by the first AMF, second information from an NRF based on the identifier of the serving AMF of the at least one ranging terminal, wherein the second information indicates that one or more candidate LMFs of the third terminal comprise an LMF of a positioning request terminal; and
determining, by the first AMF, the third terminal as the ranging initiator terminal based on the second information; or
the determining, by the first AMF, a third terminal as the ranging initiator terminal comprises:
obtaining, by the first AMF, an identifier of a serving AMF of the at least one ranging terminal from UDM;
obtaining, by the first AMF, second information from an NRF based on the identifier of the serving AMF of the at least one ranging terminal and an identifier of a serving AMF of a positioning request terminal, wherein the second information indicates that one or more candidate LMFs of the third terminal and one or more candidate LMFs of the positioning request terminal have an intersection, and the serving AMF of the positioning request terminal is the first AMF; and
determining, by the first AMF, the third terminal as the ranging initiator terminal based on the second information.

14. The method according to claim 13, wherein the obtaining, by the first AMF, second information from an NRF based on the identifier of the serving AMF of the at least one ranging terminal comprises:
sending, by the first AMF, a fifth query request to the NRF, wherein the fifth query request carries at least the identifier of the serving AMF of the at least one ranging terminal; and
receiving, by the first AMF, a fifth query response sent by the NRF, wherein the fifth query response carries the second information.

15. The method according to claim 14, wherein the fifth query request carries an identifier of the first AMF or second indication information, and the identifier of the first AMF or the second indication information indicates:
if a ranging terminal meeting a second condition exists in the at least one ranging terminal, the second information is returned, wherein one or more candidate LMFs of the ranging terminal meeting the second condition and the one or more candidate LMFs of the positioning request terminal have an intersection; or one or more candidate LMFs of the ranging terminal meeting the second condition comprise the LMF of the positioning request terminal, wherein the ranging terminal meeting the second condition comprises the third terminal.

16. The method according to any one of claims 11 to 15, wherein the obtaining, by the first AMF, an identifier of a serving AMF of the at least one ranging terminal from UDM comprises:
sending, by the first AMF, a sixth query request to the UDM, wherein the sixth query request carries an identifier of the at least one ranging terminal; and
receiving, by the first AMF, a sixth query response sent by the UMD, wherein the sixth query response carries the identifier of the serving AMF of the at least one ranging terminal.

17. The method according to any one of claims 1, 2, and 10 to 15, wherein the first network element is the first AMF; and
the indicating, by the first network element, the ranging initiator terminal to initiate ranging comprises:
sending, by the first AMF, a second request to a second LMF, wherein the second request carries indication information of the ranging initiator terminal.

18. A positioning method, applied to a first gateway mobile location center GMLC, wherein the method comprises:
receiving a first location request, wherein the first location request is used to request to perform positioning based on at least one ranging terminal; and
determining a ranging initiator terminal, wherein the ranging initiator terminal is one of the at least one ranging terminal.

19. The method according to claim 18, wherein the determining a ranging initiator terminal comprises:
determining the ranging initiator terminal based on reachability information and/or terminal subscription information of the at least one ranging terminal.

20. The method according to claim 19, further comprising:
obtaining the reachability information and/or the terminal subscription information of the at least one ranging terminal from unified data management UDM.

21. The method according to claim 20, wherein the obtaining the reachability information and/or the terminal subscription information of the at least one ranging terminal from UDM comprises:
sending a first query request carrying an identifier of the first ranging terminal to the UDM, and receiving a first query response sent by the UDM, wherein the first query response carries reachability information and/or terminal subscription information of the first ranging terminal; and
sending a second query request carrying an identifier of the second ranging terminal to the UDM, and receiving a second query response sent by the UDM, wherein the second query response carries reachability information and/or terminal subscription information of the second ranging terminal.

22. The method according to any one of claims 18 to 21, further comprising:
sending a query request carrying the identifier of the first ranging terminal to the UDM, and receiving a query response sent by the UDM, wherein the query response carries an identifier of a serving access and mobility management function AMF of the first ranging terminal; and
sending a query request carrying the identifier of the second ranging terminal to the UDM, and receiving a query response sent by the UDM, wherein the query response carries an identifier of a serving AMF of the second ranging terminal.

23. The method according to any one of claims 18 to 22, wherein the receiving a first location request comprises:
receiving the first location request from a serving AMF of a positioning request terminal, wherein the first location request carries an identifier of the at least one ranging terminal.

24. The method according to any one of claims 18 to 23, further comprising:
sending a second location request to a first AMF, wherein the second location request is used to request to obtain a ranging result between the ranging terminal and another ranging terminal in the at least one ranging terminal.

25. The method according to claim 24, wherein the second location request carries first information, the first information indicates the ranging initiator terminal, the first AMF is a serving AMF of the ranging initiator terminal, and the ranging initiator terminal is one of the at least one ranging terminal.

26. The method according to any one of claims 18 to 25, further comprising:
receiving a ranging result sent by the serving AMF of the ranging initiator terminal; and
sending the ranging result to the serving AMF of the positioning request terminal.

27. The method according to any one of claims 18 to 26, wherein the first GMLC is a GMLC serving the positioning request terminal.

28. A communication apparatus, comprising one or more processors, wherein the one or more memories store one or more computer programs, the one or more computer programs comprise instructions, wherein when the instructions are executed by the one or more processors, the communication apparatus is enabled to perform the method according to any one of claims 1 to 17 or the method according to any one of claims 18 to 27.

29. A computer-readable storage medium, comprising a computer program, wherein when the computer program is run on an electronic device, the electronic device is enabled to perform the method according to any one of claims 1 to 17 or the method according to any one of claims 18 to 27.

30. A computer program product, wherein when the computer program product runs on an electronic device, the electronic device is enabled to perform the method according to any one of claims 1 to 17 or the method according to any one of claims 18 to 27.

31. A chip system, comprising: a memory, configured to store a computer program; and a processor, wherein after the processor invokes the computer program from the memory and runs the computer program, an electronic device on which the chip system is installed performs the method according to any one of claims 1 to 17 or the method according to any one of claims 18 to 27.
